(19) Europäisches Patentamt
European Patent Office
Office européen des brevets

(11) **EP 4 564 727 A1**

(12) **EUROPEAN PATENT APPLICATION**

(43) Date of publication:
**04.06.2025 Bulletin 2025/23**

(51) International Patent Classification (IPC):
**H04L 5/00** *(2006.01)*

(21) Application number: **24209774.9**

(22) Date of filing: **30.10.2024**

(52) Cooperative Patent Classification (CPC):
**H04L 5/0044; H04L 5/0005; H04L 5/0053;**
**H04L 5/0094; H04W 84/06**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.11.2023 US 202363603450 P**

(71) Applicant: **Apple Inc.**
**Cupertino, CA 95014 (US)**

(72) Inventors:
• **YE, Chunxuan**
**San Diego, 92121 (US)**
• **ZHANG, Dawei**
**Saratoga (US)**

• **ZENG, Wei**
**Saratoga (US)**
• **HE, Hong**
**San Jose (US)**
• **BHAMRI, Ankit**
**Bad Nauheim (DE)**
• **SUN, Haitong**
**Cupertino, 95014 (US)**
• **YAO, Chunhai**
**Beijing, 100022 (CN)**
• **FAKOORIAN, Seyed Ali Akbar**
**San Diego, 92121 (US)**

(74) Representative: **Zacco Denmark A/S**
**Arne Jacobsens Allé 15**
**2300 Copenhagen S (DK)**

(54) **SYSTEMS AND METHODS FOR THROUGHPUT ENHANCEMENT IN NON-TERRESTRIAL NETWORKS USING SUB-PHYSICAL RESOURCE BLOCK RESOURCE ALLOCATIONS**

(57) Systems and methods for throughput enhancement in non-terrestrial networks (NTNs) using orthogonal cover code (OCC) spreading are discussed. A user equipment (UE) of an NTN that communicates with a base station over a service link of the NTN receives, from the base station, a downlink control information (DCI) that indicates a dynamic uplink grant for a physical uplink shared channel (PUSCH), where the DCI communicates an OCC sequence index; identifies, using the OCC se-quence index, a first OCC sequence for the first PUSCH from a set of OCC sequences of an OCC size corresponding to the OCC sequence index; spreads data for the PUSCH into the PUSCH using the first OCC sequence; and sends, to the base station, over the service link, the PUSCH according to the dynamic uplink grant. Cases using configuration information for a configured uplink grant are also discussed. Corresponding base station behaviors are discussed.

FIG. 8

## Description

TECHNICAL FIELD

This application relates generally to wireless communication systems, including wireless communication systems supporting non-terrestrial network (NTN) communications.

BACKGROUND

Wireless mobile communication technology uses various standards and protocols to transmit data between a base station and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi®).

As contemplated by the 3GPP, different wireless communication systems' standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, Global System for Mobile communications (GSM), Enhanced Data Rates for GSM Evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements Universal Mobile Telecommunication System (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC) while NG-RAN may utilize a 5G Core Network (5GC).

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 illustrates an NTN architecture of a wireless communication system, according to an embodiment.

FIG. 2 illustrates an NTN architecture of a wireless communication system, according to an embodiment.

FIG. 3 illustrates a flow diagram corresponding to the use of uplink multiplexing using OCC spreading, according to various embodiments discussed herein.

FIG. 4 illustrates a diagram of a PRB over one symbol.

FIG. 5 illustrates a table showing a first configuration, a second configuration, and a third configuration corresponding to the use of resource allocation type 0.

FIG. 6 illustrates a table showing a first configuration, a second configuration, a third configuration, and a fourth configuration corresponding to the use of resource allocation type 0.

FIG. 7 illustrates a flow diagram corresponding to the use of uplink multiplexing on a sub-PRB basis in the frequency domain, according to various embodiments discussed herein.

FIG. 8 illustrates a method of a UE of a NTN that communicates with a base station over a service link of the NTN, according to embodiments herein.

FIG. 9 illustrates a method of a UE of a NTN that communicates with a base station over a service link of the NTN, according to embodiments herein.

FIG. 10 illustrates a method of base station of a NTN that communicates with a first UE over a service link of the NTN, according to embodiments herein.

FIG. 11 illustrates a method of a base station of a NTN that communicates with a first UE over a service link of the NTN, according to embodiments herein.

FIG. 12 illustrates a method of a UE of a NTN that communicates with a base station over a service link of the NTN, according to embodiments herein.

FIG. 13 illustrates a method of a base station of a NTN that communicates with a UE over a service link of the NTN, according to embodiments herein.

FIG. 14 illustrates a method of a UE of a NTN that communicates with a base station over a service link of the NTN, according to embodiments herein.

FIG. 15 illustrates a method of a base station of a NTN that communicates with a first UE over a service link of the NTN, according to embodiments herein.

FIG. 16 illustrates an example architecture of a wireless communication system, according to embodiments disclosed herein.

FIG. 17 illustrates a system for performing signaling between a wireless device and a RAN device connected to a core network of a CN device, according to embodiments disclosed herein.

## DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

Embodiments for Non-Terrestrial Networks (NTNs)

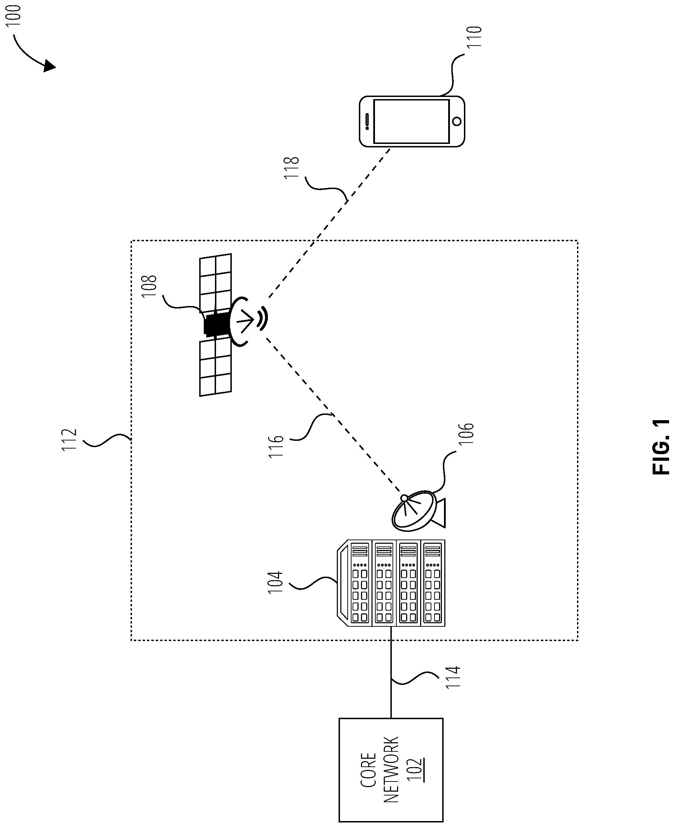

FIG. 1 illustrates an NTN architecture 100 of a wireless communication system, according to an embodiment. The NTN architecture 100 includes a core network (CN) 102, a terrestrial base station 104, a satellite gateway 106, a satellite 108, and a UE 110. The terrestrial base station 104, the satellite gateway 106, and the satellite 108 may be included in a RAN 112.

In some embodiments, the RAN 112 includes E-UTRAN, the CN 102 includes an EPC, and the terrestrial base station 104 includes an eNB. In these cases, the CN link 114 connecting the CN 102 and the terrestrial base station 104 may include an S1 interface.

In some embodiments, RAN 112 includes NG-RAN, the CN 102 includes a 5GC, and the terrestrial base station 104 includes a gNB or a next generation eNB (ng-eNB). In such cases, the CN link 114 connecting the CN 102 and the terrestrial base station 104 may include an NG interface.

The NTN architecture 100 illustrates a "bent-pipe" or "transparent" satellite based architecture. In such bent-pipe systems, the terrestrial base station 104 uses the satellite gateway 106 to communicate with the satellite 108 over a feeder link 116. The satellite 108 may be equipped with one or more antennas capable of broadcasting a cell according to the RAN 112, and the UE 110 may be equipped with one or more antennas (e.g., a moving parabolic antenna, an omni-directional phased-array antenna, etc.) capable of communicating with the satellite 108 via a Uu interface on that cell (such communications may be said to use the illustrated service link 118). A payload sited on the satellite 108 then transparently forwards data between the satellite gateway 106 and the UE 110 using the feeder link 116 between the satellite gateway 106 and the satellite 108 and the service link 118 between the satellite 108 and the UE 110. The payload may perform radio frequency (RF) conversion and/or amplification in both uplink (UL) and downlink (DL) to enable this communication.

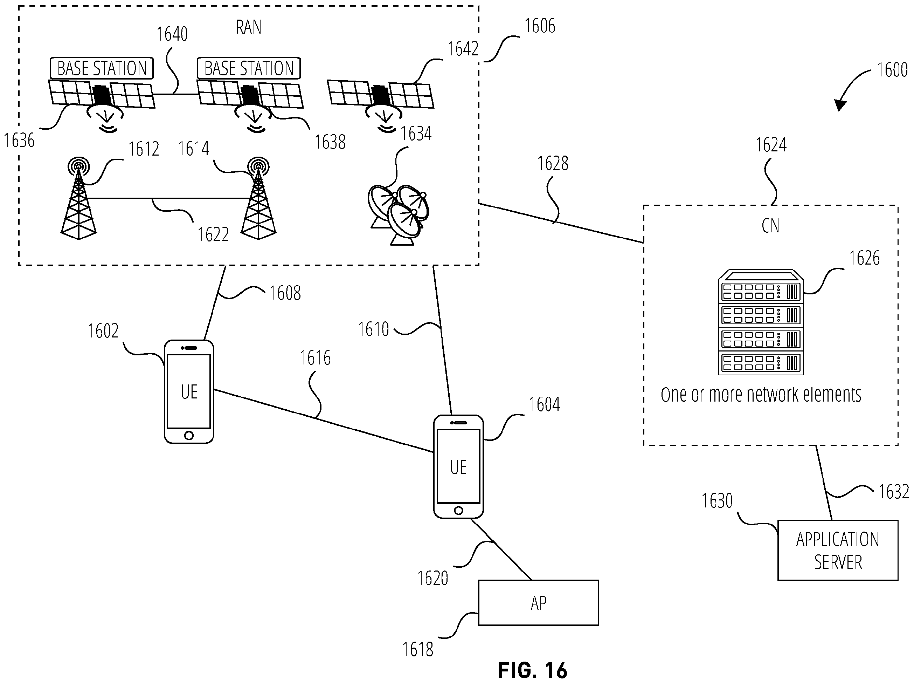

In the embodiment shown in FIG. 1, the terrestrial base station 104 is illustrated without the capability of terrestrial wireless communication directly with a UE. However, it is contemplated that in other embodiments, such a terrestrial base station using the satellite gateway 106 to communicate with the satellite 108 could (also) have this functionality (i.e., as in the terrestrial base station 1612 and the terrestrial base station 1614 of FIG. 16, to be described below).

It may be understood that, in alternative embodiments to FIG. 1, the satellite 108 may instead be a non-satellite NTN vehicle (e.g., an airplane, an unmanned aerial vehicle (UAV), an unmanned aircraft system (UAS), an airship, a balloon, etc.). Further, it may be understood in such alternative embodiments that the satellite gateway 106 may instead be a gateway for or corresponding to the applicable NTN vehicle type.

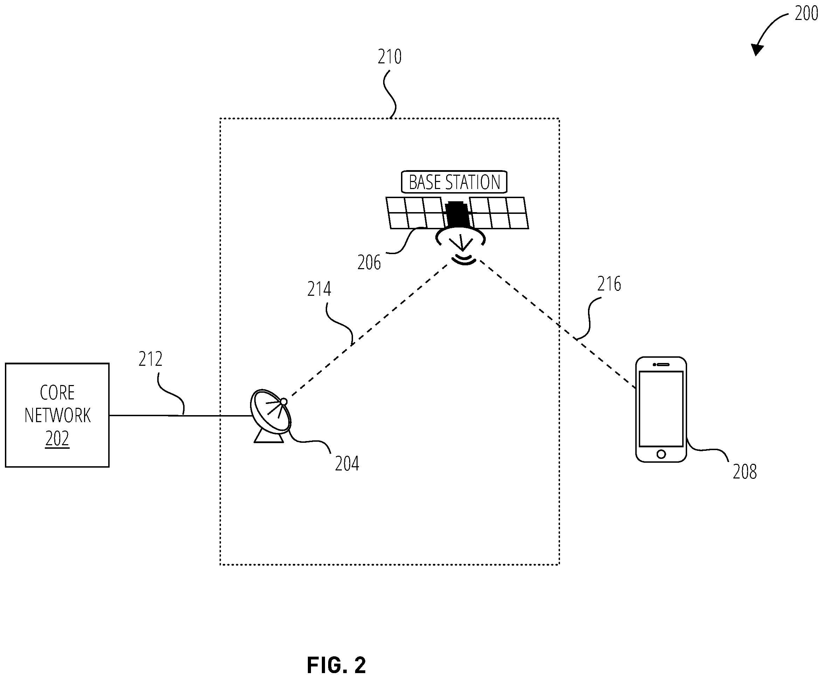

FIG. 2 illustrates an NTN architecture 200 of a wireless communication system, according to an embodiment. The NTN architecture 200 includes a CN 202, a satellite gateway 204, a satellite base station 206, and a UE 208. The satellite gateway 204 and the satellite base station 206 may be included in the RAN 210.

In some embodiments, the RAN 210 includes E-UTRAN and the CN 202 includes an EPC. In these cases, the CN link 212 connecting the CN 202 and the satellite gateway 204 may include an S 1 interface.

In some embodiments, RAN 210 includes NG-RAN and the CN 202 includes a 5GC. In such cases, the CN link 212 connecting the CN 202 and the satellite gateway 204 may include an NG interface.

The NTN architecture 100 implements a "regenerative" satellite based architecture. In such regenerative systems, the functionalities of a base station are sited on the satellite base station 206, and the communications between these base station functions and the CN 202 occur through a forwarding of interface(s) (e.g., a S 1 interface and/or an NG interface) found on the CN link 212 through the satellite gateway 204 and a feeder link 214 to the satellite base station 206. The satellite base station 206 may be equipped with one or more antennas capable of broadcasting a cell according to the RAN 210, and the UE 208 may be equipped with one or more antennas (e.g., a moving parabolic antenna, an omni-directional phased-array antenna, etc.) capable of communicating with the satellite base station 206 via a Uu interface on that cell (such communications may be said to use the illustrated service link 216). A payload sited on the satellite base station 206 then forwards data between the satellite gateway 204 and the UE 208 using the feeder link 214 between the satellite gateway 204 and the satellite base station 206 and the service link 216 between the satellite base station 206 and the UE 208. The payload may perform RF conversion and/or amplification in both uplink (UL) and downlink (DL) to enable this communication, as well as implement the functionalities of the base station (e.g., as an eNB, ng-eNB or a gNB, as corresponding to the type of the RAN 210) as these have been sited on the satellite base station 206.

In embodiments of NTN architectures comprising NG-RAN that also use integrated access and backhaul (IAB), it is possible that a gNB control unit functionality (CU) could be sited terrestrially and may use a satellite gateway to communicate with a satellite that hosts a corresponding gNB donor unit functionality (DU), with the F 1 interface(s) between the CU and the DU underpinned by the feeder link 214. In such cases, the CU and the DU may each be understood to be part of the NG-RAN.

It may be understood that, in alternative embodiments to FIG. 2, the satellite base station 206 may instead be a non-satellite NTN base station (e.g., an airplane, a UAV, a UAS, an airship, a balloon, etc.). Further, it may be understood in such alternative embodiments that the satellite gateway 204 may instead be a gateway for or corresponding to the applicable NTN vehicle type.

Wireless communication systems can benefit from uplink capacity and throughput enhancements in NTN contexts.

Further, mechanisms for the use of multiplexing in order to enhance uplink capacity and throughput in NTN contexts may improve uplink capacity and/or enhance throughput.

In some embodiments, orthogonal cover codes (OCCs) may be used in NTN contexts to achieve multiplexing via orthogonal spreading.

In some embodiments, allocations of sub-physical resource block (sub-PRB) allocations, where a sub-PRB is a frequency domain resource of fewer than the 12 subcarriers for a full physical resource block (PRB), may be used in NTN contexts. Sub-PRB allocations may occur on a per-UE basis. Such sub-PRB allocations may be used to achieve frequency-domain multiplexing.

For example, embodiments of multiplexing mechanisms disclosed herein discuss procedures for uplink multiplexing with OCC in NTN contexts, including, for example, signaling details about uplink grant transmissions with OCC (e.g., downlink control information (DCI) format modifications for dynamic grant and/or configured grant configuration modifications) and details with respect to OCC sequence index determinations in various scenarios (such as where there are multiple PRBs in a physical uplink shared channel (PUSCH), where there is frequency hopping for a PUSCH, and/or where a single DCI is used to schedule for multiple PUSCHs).

Other examples disclosed herein correspond to multiplexing mechanisms supporting/using of sub-PRB allocations (e.g., on a per-UE basis). Some such embodiments discuss a resource indication bitmap for sub-PRB resource allocation (e.g., for a physical uplink shared channel (PUSCH)) in a resource allocation type 0 context that uses a resource block group (RBG) configuration with components that are understood in/represented in terms of a fractional number of PRBs. As another example, some such embodiments discuss a resource allocation type 1 that uses a frequency resource indicator value (FRIV) calculation/formula that operates with respect to/in terms of sub-PRBs. With respect to these either/both of such resource allocation type 0 or type 1 cases, further embodiments disclosed herein discuss uses of a transport block size (TBS) determination that leverages an understanding of a total number of resource elements (REs) (e.g., for a PUSCH).

Embodiments for Uplink Multiplexing with OCC

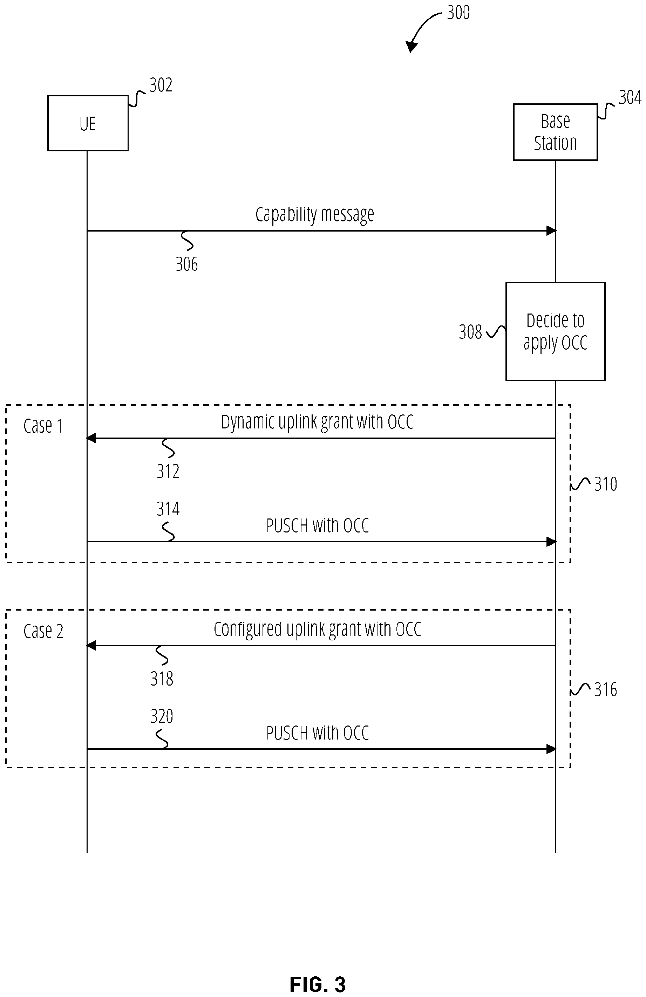

FIG. 3 illustrates a flow diagram 300 corresponding to the use of uplink multiplexing using OCC spreading, according to various embodiments discussed herein.

The flow diagram 300 illustrates communications between a UE 302 and a base station 304. It may be that the UE 302 and the base station 304 communicate over a service link of an NTN. Further, while the flow diagram 300 illustrates only a single UE 302, it should be understood that, for example, the base station 304 performs analogous communication as to that to be described in relation to the UE 302 with multiple UEs (in addition to the UE 302), with the end result that each of these multiple UEs is configured with a different OCC sequence such that spatial domain multiplexing occurs/is in place with respect to UL transmissions across each of these multiple UEs.

It may be that the UE 302 sends 306 a capability message that reports one or more capabilities of the UE 302 to the base station 304. Using the information in the capability message, the UE may indicate its capability of using OCC spreading for its uplink transmissions with the base station 304 over the service link. In some cases, there may be a separate capability reporting within the capability message for each of a PUSCH and a physical uplink control channel (PUCCH) (e.g., the UE 302 may report that it can send one of a PUSCH and a PUCCH over the service link using OCC spreading, but may not report that it can send (or may affirmatively report that it cannot send) the other of the PUSCH and the PUCCH over the service link using OCC spreading).

Then, base station 304 decides 308 to configure one or more of the UEs (e.g., including the UE 302) to use OCC spreading over the service link. This decision with respect to the one or more UEs may depend on one or more factors.

For example, the base station 304 may decide 308 to configure a UE (e.g., including the UE 302) to use OCC spreading if a network congestion level is high.

Alternatively and/or additionally, the base station 304 may decide 308 to configure a UE (e.g., the UE 302) to use OCC spreading if the UE has reported that it is capable of doing so (e.g., using a capability message as described).

Alternatively and/or additionally, the base station 304 may decide 308 whether to configure a UE (e.g., the UE 302) to use OCC spreading based on a number of PRBs for an uplink transmission of the UE.

Alternatively and/or additionally, the base station 304 may decide 308 whether to configure a UE (e.g., the UE 302) to use OCC spreading based on a number of repetitions for an uplink transmission of the UE.

Alternatively and/or additionally, the base station 304 may decide 308 whether to configure a UE (e.g., the UE 302) to use OCC spreading based on a starting slot of an uplink transmission of the UE.

Alternatively and/or additionally, the base station 304 may decide 308 to configure a UE (e.g., the UE 302) to use OCC spreading based on a timing advance (TA) value reported by the UE. For example, in a case where two UEs report similar TA values, they may be configured to share the same time-frequency resources for respective UL transmissions, with each UE using a separate OCC spreading code.

Alternatively and/or additionally, the base station 304 may decide 308 whether to configure a UE (e.g., the UE 302) to use OCC spreading based on whether demodulation reference signal (DMRS) bundling is applied at the UE. For example, it may be that if a UE uses DMRS bundling, then the base station 304 determines not to use OCC spreading for uplink multiplexing at that UE.

Then, in a first case 310, the base station 304 sends 312 the UE 302 a dynamic uplink grant that indicates that the UE 302 is to use OCC spreading. Under the first case 310, it may be that the dynamic uplink grant may be a DCI format 0_1 or DCI format 0_2 that indicates an OCC sequence index that identifies the OCC sequence to be used for the OCC spreading by the UE 302. The UE then sends 314 a PUSCH having data that is spread by the identified OCC sequence.

In some examples of the first case 310, an applicable OCC size is/has been configured to the UE 302 via radio resource control (RRC) signaling. In such cases, the identification of an OCC sequence to use for the OCC spreading is performed by applying the OCC sequence index as indicated in the DCI to a set of OCC sequences of the configured size. For example, if RRC signaling configures an OCC size of $N_{occ} = 12$, an OCC sequence index provided in DCI (that is, for example, represented using $\lceil \log_2(N_{occ}) \rceil$ bits) indexes into the set of OCC sequences having an OCC size of 12 that is known to the UE.

In alternative examples of the first case 310, both the OCC size and the OCC sequence index to use are indicated in the DCI. For example, in addition to the OCC sequence index as just described, a DCI further includes an indication of the OCC size (e.g., an indication that $N_{occ} = 12$). Then, the OCC sequence index provided in DCI indexes into the set of OCC sequences having an OCC size of 12 that is known to the UE.

According to the first case 310, it may be that the DCI has a dedicated field for indicating an OCC sequence index as described. It may further be that the DCI has a dedicated field for indicating an OCC size as described (e.g., in cases where the DCI is to indicate the OCC size).

Note that in some instances of a single such DCI that schedules multiple PUSCHs, the OCC sequence to use for spreading a second PUSCH may be understood the same as the OCC sequence identified for use for spreading the first PUSCH (e.g., as indicated by the OCC sequence index in the DCI).

In other instances of a single such DCI that schedules multiple PUSCHs, the OCC sequence to use for spreading the second PUSCH may be an OCC sequence that is identified by adding one to the OCC sequence index corresponding to the first PUSCH (e.g., such that a next OCC sequence in the applicable set of OCC sequences is used to spread the second PUSCH).

Alternatively, the OCC sequence to use for spreading the repetition of the PUSCH may be identified by adding some other offset value to the OCC sequence index corresponding to the first PUSCH (with wrap around) (e.g., such that the UE 302 to "jumps," in a determinable/defined manner, to another OCC sequence in the applicable set of OCC sequences which is then used to spread the second PUSCH).

Alternatively to the first case 310, in a second case 316, the base station 304 sends 318 the UE 302 a configured uplink grant that indicates that the UE 302 is to use OCC spreading. Note that like the first case 310, the second case 316 may contemplate the use of an OCC sequence index to identify an OCC index for use in an OCC spreading operation from a set of OCC sequences corresponding to an OCC size. The UE then sends 320 a PUSCH having data that is spread by the identified OCC sequence.

In some examples of the second case 316, a Type 1 configured grant (a configured grant that is both configured by and implicitly activated by RRC signaling) may be used. Such a Type 1 grant may use a configured grant configuration that includes fields for both an OCC size and an OCC sequence index. The following is an example of (part of) such a Type 1 configured grant configuration:

$$
\begin{aligned}
&ConfiguredGrantConfig \ :: = \ SEQUENCE \ \{ \\
&rrc\text{-}ConfiguredUplinkGrant \qquad SEQUENCE \ \{ \\
&OCC\text{-}size \qquad\qquad ENUMERATED\{1, \ 2, \ 4, \ 6, \ 12\} \\
&OCC\text{-}sequence
\end{aligned}
$$

where *"OCC-size"* is an OCC size and *"OCC-sequence"* is an OCC sequence index.

In other examples of the second case 316, a Type 2 configured grant (a configured grant that is configured by RRC signaling and then activated/deactivated by DCI) may be used.

In some cases of a Type 2 configured grant, both an OCC size and an OCC sequence index may be present in such a configured grant configuration (e.g., analogously to what is discussed above in relation to a Type 1 configured grant configuration).

In some cases of a Type 2 configured grant, an OCC size may be configured in a configured grant configuration, and then an indication of an OCC sequence index for use corresponding to that OCC size may arrive in the activation DCI for the configured grant configuration.

In some cases of a Type 2 configured grant, both an indication of the OCC size and an indication of an OCC sequence index for use corresponding to that OCC size may arrive in the activation DCI for the configured grant configuration.

Note that in various embodiments (e.g., according to either of the first case 310 for dynamic grants or the second case 316 for configured grants), PUSCH repetition may be used. Such cases may implement OCC spreading for the repeated PUSCHs in one of multiple possible manners.

In a first such manner, all instances of the PUSCH use the same OCC sequence as indicated in the applicable DCI/configured grant configuration.

In a second such manner, OCC sequence cycling is used. Under OCC sequence cycling, the initial instance of the PUSCH may be spread using the OCC sequence indicated in the applicable DCI/configured grant configuration. Then, the OCC sequence to use for spreading the repetition of the PUSCH may be an OCC sequence that is identified by adding one to the OCC sequence index corresponding to the initial instance of the PUSCH (e.g., such that a next OCC sequence in the applicable set of OCC sequences is used to spread the repetition of the PUSCH). Alternatively, the OCC sequence to use for spreading the repetition of the PUSCH may be identified by adding some other offset value to the OCC sequence index corresponding to the initial instance of the PUSCH (with wrap around) (e.g., such that the UE 302 "jumps," in a determinable/defined manner, to another OCC sequence in the applicable set of OCC sequences which is then used to spread the repetition of the PUSCH).

Note that in various embodiments (e.g., according to either of the first case 310 for dynamic grants or the second case 316 for configured grants), multiple PRBs may be scheduled for use by a PUSCH. Such cases may implement OCC spreading across these multiple PRBs in one of multiple possible manners.

In a first such manner, all the PRBs scheduled for the PUSCH use the same OCC sequence as indicated in the applicable DCI/configured grant configuration.

In a second such manner, OCC sequence cycling is used. Under OCC sequence cycling, the OCC sequence to use for spreading on the first (the lowest) PRB uses the OCC sequence as indicated in the applicable DCI/configured grant configuration. Then, the OCC sequence used for spreading on the second (second lowest) PRB may be an OCC sequence that is identified by adding one to the OCC sequence index corresponding to the first PRB (e.g., such that a next OCC sequence in the applicable set of OCC sequences is used to spread the second lowest PRB). Alternatively, the OCC sequence to use for spreading on the second PRB may be identified by adding some other offset value to the OCC sequence index corresponding to first PRB (with wrap around) (e.g., such that the UE 302 "jumps," in a determinable/defined manner, to another OCC sequence in the applicable set of OCC sequences which is then used to spread the second PRB).

Note that in various embodiments (e.g., according to either of the first case 310 for dynamic grants or the second case 316 for configured grants) frequency hopping may be applied for the PUSCH. Such cases may implement OCC spreading for the frequency hopping in one of multiple possible manners.

In a first such manner, each of a no-hop, a first hop, and a second hop for a PUSCH use the same OCC sequence as indicated in the applicable DCI/configured grant configuration.

In a second such manner, OCC sequence cycling is used. Under OCC sequence cycling the no-hop is spread using the OCC sequence as indicated in the applicable DCI/configured grant configuration. Then, the OCC sequence used for spreading the first hop may be an OCC sequence that is identified by adding one to the OCC sequence index for the no-hop, and the OCC sequence used for spreading the second hop may be an OCC sequence that is identified by adding two to the OCC sequence index for the no-hop (e.g., such that progressively next OCC sequences in the applicable set of OCC sequences are used to spread subsequent hops). Alternatively, the OCC sequence to use for spreading on the first hop may be identified by adding some first offset value to the OCC sequence index corresponding to the no-hop (with wraparound), and the OCC sequence to use for spreading on the second hop may be identified by adding some second offset value to the OCC sequence index corresponding to the no-hop (with wrap around) (e.g., such that the UE 302 "jumps," in a determinable/defined manner, to other OCC sequences in the applicable set of OCC sequences which is then used to spread the first hop and the second hop).

Embodiments for Uplink Multiplexing using Sub-PRB Resource Allocations

In some embodiments, a frequency allocation mechanism that can allocate sub-PRB resources in the frequency domain (e.g., on a per UE basis) may be used.

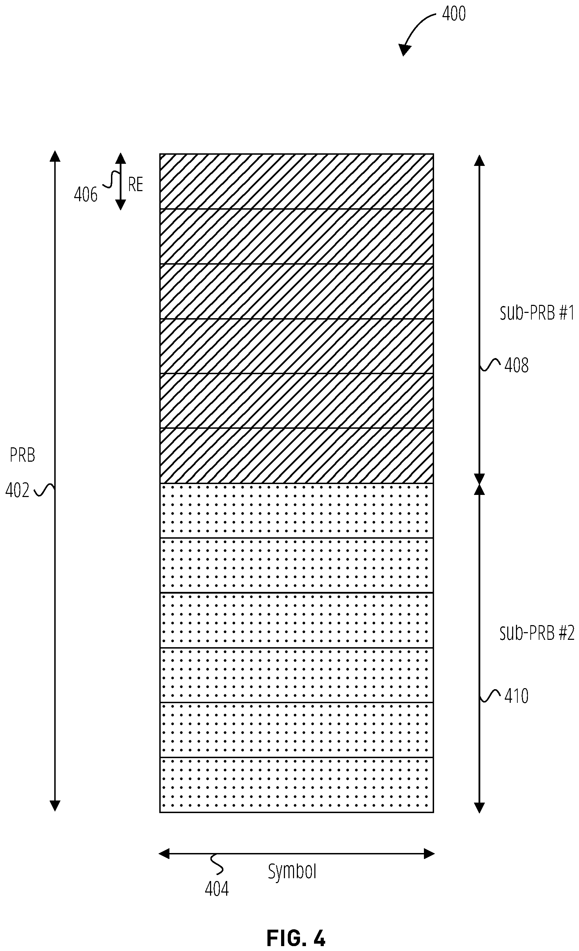

FIG. 4 illustrates a diagram 400 of a PRB 402 over one symbol 404. As illustrated, the PRB 402 is made up of 12 REs 406. Further, as also illustrated, according to one type of sub-PRB scheme, it may be understood that the PRB 402 is made up of two sub-PRBs (the first sub-PRB 408 and the second sub-PRB 410) having six REs each.

The use of two PRBs each having six REs is given here by way of example and not by way of limitation. Note that in other sub-PRB schemes, a PRB could be made up instead of, for example, three sub-PRBs each having four REs, or four sub-PRBs each having three REs, etc.

Note that herein, a resource allocation that occurs in terms of sub-PRBs may be referred to as a "sub-PRB resource allocation" (or the like), even in cases where, for example, a contiguous size of the ultimate allocation is equal to or greater than a PRB size.

An ability to allocate uplink resources to UEs operating in NTN contexts in terms of sub-PRBs may be beneficial for various reasons. For example, it may be that frequency-domain transmission resources are relatively more limited in NTN contexts than in terrestrial access contexts. Accordingly, an ability to allocate uplink resources to UEs on a sub-PRB basis may allow a base station to fit more UEs into the available frequency-domain transmission resources.

Note that in various NTN contexts, uplink transmission needs of a UE may be less (e.g., per an expectation of the user of the UE that coverage in the NTN case is not as robust as in a terrestrial coverage case). The allocation of sub-PRBs in such contexts (e.g., in order to achieve a more efficient per-UE use of limited frequency-domain resources, as just discussed) may reflect the recognition that an expected UE uplink speed is likely relatively lower for NTN contexts, and thus that any service quality penalties at an individual UE associated with uplink resource allocation on a sub-PRB basis will be acceptable/expected.

Type 0 resource allocation is now discussed.

In mechanisms for resource allocation type 0, a bitmap is used to indicate transmission resources to the UE. Bits in the bitmap are understood to correspond to resource block groups (RBGs). A "1" in the bitmap indicates to the UE that the UE is allocated the use of that RBG (e.g., can use the corresponding RBG for uplink transmission and/or for downlink reception, as the case may be), while a "0" in the bitmap indicates to the UE that the UE has not been allocated the use of that RBG (e.g., the UE cannot use the corresponding RBG for uplink transmission and/or for downlink reception, as the case may be).

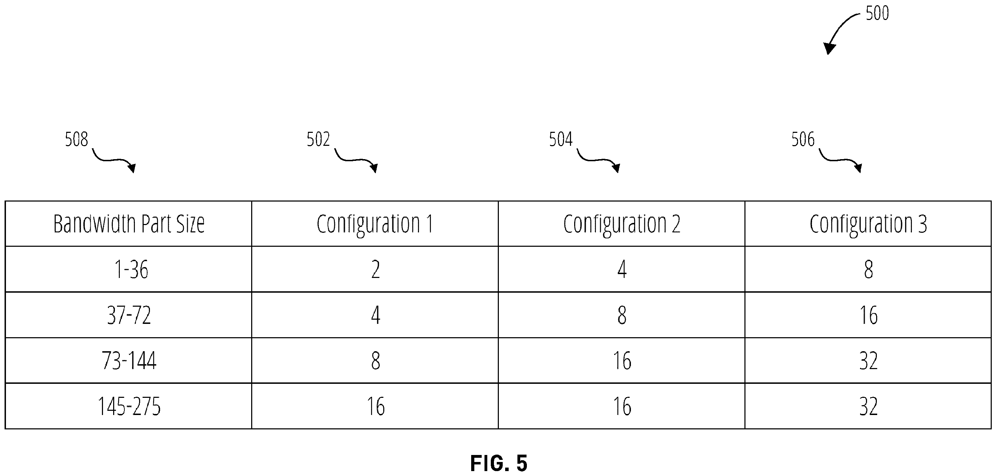

The size of each RBG (in PRBs) represented in the incoming type 0 resource allocation bitmap may be understood at the UE according to a configuration. FIG. 5 illustrates a table 500 showing a first configuration 502, a second configuration 504, and a third configuration 506 corresponding to the use of resource allocation type 0. As illustrated in the table 500, for whichever one of the first configuration 502, the second configuration 504, and the third configuration 506 is configured at the UE, an RBG size (denoted P) in terms of a number of PRBs with respect to an incoming type 0 resource allocation bitmap may be determined by the UE as a function of an applicable/active bandwidth part (BWP) size 508. For example, per the table 500, in the case that the UE is configured to use the second configuration 504, and where the applicable frequency-domain BWP size is between 73 and 144 PRBs, the UE will understand individual bits of any incoming resource allocation type 0 bitmap to correspond to RBGs having 16 PRBs each (P = 16).

*Refer to, for example,* Table 6.1.2.2.1-1 and more generally to Section 6.1.2.2.1 of 3GPP Technical Specification (TS) 38.214, version 18.0.0 (September 2023) (hereinafter 3GPP TS 38.214) (uplink cases) *and* Table 5.1.2.2.1-1 and more generally to Section 5.1.2.2.1 of 3GPP TS 38.214 (downlink cases).

Then, note that with respect to uplink cases, for an uplink BWP of size $N_{BWP}^{size}$ PRBs, the total number of RBGs in the uplink BWP $N_{RBG}$ may be understood at the UE by using:

$$N_{RBG} = \left\lceil \left( N_{BWP}^{size} + \left( N_{BWP}^{start} mod P \right) \right) / P \right\rceil,$$

where: P is the determined RBG size in terms of a number of PRBs, and $N_{BWP}^{start}$ is a starting PRB index for the BWP relative to a common resource block (CRB) for the channel in which the BWP resides.

Embodiments discussed herein relate to the use of resource allocation type 0 to provide a UE with an uplink allocation in terms of sub-PRB resources. In such cases, to support sub-PRB allocation per UE, a new RBG configuration type may be introduced.

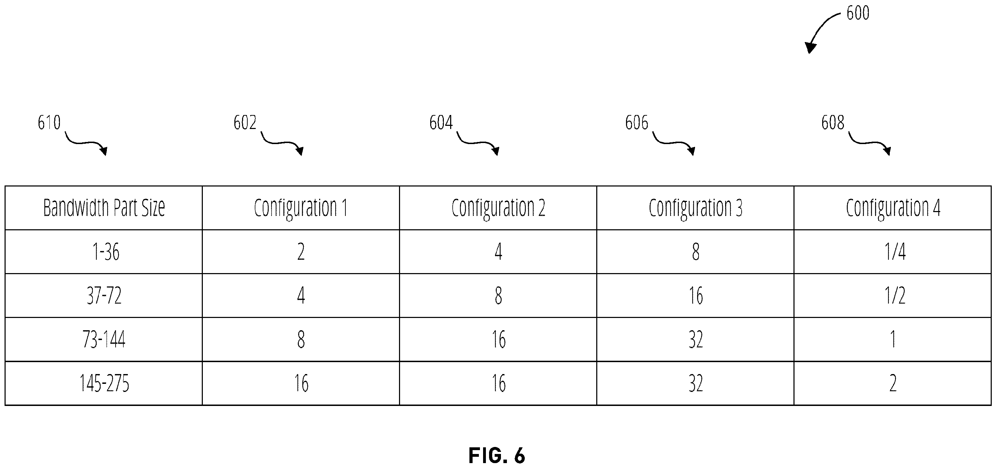

FIG. 6 illustrates a table 600 showing a first configuration 602, a second configuration 604, a third configuration 606, and a fourth configuration 608 corresponding to the use of resource allocation type 0. The first configuration 602, the second configuration 604, and the third configuration 606 may correspond respectively to the first configuration 502 the second configuration 504, and the third configuration 506 as were discussed in relation to the table 500 of FIG. 5. The fourth configuration 608 then corresponds to the new RBG configuration type under discussion here.

Such a new RBG configuration type may use a nominal RBG size *P* that denotes a fraction of a PRB (a sub-PRB) as the RBG size. For example, in some such configurations, *P* may be equal to ½ (e.g., 6 REs), ⅓ (e.g., 4 REs), or ¼ (e.g., 3 REs) of a PRB.

The fourth configuration 608 represents a first example of the new RBG configuration type. The fourth configuration 608 corresponds to a case where, for example, the value *P* depends on BWP size 610. For example, for BWP size 1-36, *P* = ¼ (corresponding to a case where each bit of the bitmap corresponds to a sub-PRB of three REs); for BWP size 37-72, P = ½ (corresponding to a case where each bit of the bitmap corresponds to a sub-PRB of six REs); for BWP size 73-144, *P* = 1 (corresponding to a case where each bit of the bitmap corresponds to a single PRB); and for BWP size 145-275, *P* = 2 (corresponding to a case where each bit of the bitmap corresponds to two PRBs). Thus, when configured to use the fourth configuration 608, a UE will understand that bits in an incoming type 0 resource allocation bitmap allocate resources in terms of sub-PRBs whenever the BWP size is less than or equal to 72 PRBs.

The fourth configuration 608 is given by way of example and not by way of limitation. It is contemplated that various values of *P* (either fractional and/or non-fractional) as corresponding to various (modifiable) number and combinations of BWP sizes may be used in analogous configurations.

In a second example of the new RBG configuration type, the value *P* may be a fractional value as discussed, and may be fixed with respect to/independent of BWP size.

In cases where sub-PRBs are used (where *P* is a fractional value), the total number of RBGs represented in the resource allocation type 0 bitmap $N_{RBG}$ is given by

$$N_{RBG} = N_{BWP}^{size}/P$$

Corresponding to some such cases, *P* may be equal to, for example, ½ (for 6 REs in an RBG), ⅓ (giving 4 REs in an RBG), or ¼ (giving 3 REs in an RBG). Then, each bit in the type 0 resource allocation bitmap indicates whether (or not) a particular sub-PRB of the *P*-controlled number of REs within the allocation range is allocated for use by the UE.

The use of the new RBG configuration type may be indicated to the UE in configured grant configuration (e.g., in a *"ConfiguredGrantConfig"* information element (IE)) for a configured grant mechanism used by the UE. Alternatively, the use of the new RBG configuration type may be indicated to the UE in a UE-specific PUSCH configuration (e.g., in a *"PUSCH-Config"* IE).

Type 1 resource allocation is now discussed.

In some mechanisms for resource allocation type 1, the resource unit (e.g., the allocation unit) is a PRB, and an FRIV is correspondingly used to indicate an allocation of uplink transmission resources in terms of such units (PRBs) to the UE. The FRIV value (sometimes denoted *RIV*) ultimately calculated and provided to the UE depends on the starting RB ($RE_{start}$), the length of contiguous RBs ($L_{RBs}$) in frequency-domain resources to be allocated to the UE, and a size of the uplink BWP $N_{BWP}^{size}$ in PRBs. For example:

$$\text{if } \left( L_{RBs} - 1 \right) \leq \left\lfloor N_{BWP}^{size}/2 \right\rfloor, \text{ then}$$

$$RIV = N_{BWP}^{size}\left( L_{RBs} - 1 \right) + RB_{start};$$

$$\text{else,}$$

$$RIV = N_{BWP}^{size}\left( N_{BWP}^{size} - L_{RBs} + 1 \right) + \left( N_{BWP}^{size} - 1 - RB_{start} \right); \text{ where}$$

$$L_{RBs} \geq 1 \text{ and shall not exceed } N_{BWP}^{size} - RB_{start}.$$

Upon receiving the FRIV (*RIV*), the UE applies its independent knowledge of $N_{BWP}^{size}$ to reverse this procedure in order to determine $RB_{start}$ and $L_{RBs}$, thereby identifying the uplink frequency-domain allocation. *See generally* Section 6.1.2.2.2 of 3GPP TS 38.214.

Embodiments discussed herein relate to the use of resource allocation type 0 to provide a UE with an uplink allocation in units of sub-PRB resources (rather than in units of full PRBs).

For such cases, in order to support the per-UE sub-PRB allocation, the granularity of resource units is understood to be in terms of a sub-PRB rather than in terms of a PRB. With respect to such cases, the number of sub-PRBs in a single PRB may be denoted $N_{subRB}^{RB}$ (e.g., where $N_{subRB}^{RB} = 2$ implies that each PRB has 2 sub-PRBs of 6 REs each, $N_{subRB}^{RB} = 3$ implies that each PRB has 3 sub-PRBs of four REs each, and where $N_{subRB}^{RB} = 4$ implies that each PRB has 4 sub-PRBs of 3 REs each).

Then, the FRIV (*RIV*) ultimately calculated and provided to the UE depends on the starting sub-PRB ($subRB_{start}$), the length of contiguous sub-PRBs ($L_{subRBs}$) in frequency-domain resources to be allocated to the UE, and a size of the uplink BWP $N_{BWP}^{size}$ in PRBs. For example:

$$\text{if } \left( L_{subRBs} - 1 \right) \leq \left\lfloor N_{BWP}^{size} \cdot N_{subRB}^{RB}/2 \right\rfloor, \text{ then}$$

$$RIV = N_{BWP}^{size} \cdot N_{subRB}^{RB} \cdot \left( L_{subRBs} - 1 \right) + subRB_{start};$$

$$\text{else,}$$

$$RIV = N_{BWP}^{size} \cdot N_{subRB}^{RB} \cdot \left( N_{BWP}^{size} \cdot N_{subRB}^{RB} - L_{subRB} + 1 \right) + \left( N_{BWP}^{size} \cdot N_{subRB}^{RB} - 1 - subRB_{start} \right);$$

$$\text{where}$$

$$L_{subRBs} \geq 1 \text{ and shall not exceed } N_{BWP}^{size} \cdot N_{subRB}^{RB} - subRB_{start}.$$

Transport block size (TBS) determination in the context of allocations in sub-PRBs is now discussed.

However resources are allocated to a UE (e.g., whether using resource allocation type 0 or resource allocation type 1), the UE may also need to determine an appropriate/expected TBS to use within the allocated uplink resources. The appropriate TBS may depend on the number of REs allocated within the PUSCH (denoted $N_{RE}$). Accordingly, mechanisms for determining the number of REs allocated within the PUSCH are now described.

A mechanism for determining the number of REs allocated within PUSCH under a type 0 resource allocation mechanism as described herein is now discussed.

The UE first determines the number of REs allocated for the PUSCH within an RBG of a fractional size (the sub-PRB). This value may be denoted $N'_{RE}$, calculated using:

$$N'_{RE} = \left( N^{RB}_{sc} \cdot N^{sh}_{symb} - N^{PRB}_{DMRS} - N^{PRB}_{oh} \right) \cdot P,$$

where:

$N'_{RE}$ is the first number of REs allocated for the PUSCH within each of the one or more RBGs;

$N^{RB}_{sc}$ is a per-PRB number of subcarriers in a frequency domain;

$N^{sh}_{symb}$ is a number of symbols for the PUSCH;

$N^{PRB}_{DMRS}$ is a per-PRB number of REs used for demodulation reference signals (DM-RSs);

$N^{PRB}_{oh}$ is a per-PRB configured overhead in number of REs; and

$P$ is the RBG size for the PUSCH as expressed in PRB terms.

Flooring, ceiling, and/or or rounding operations may then be used on $N'_{RE}$ to keep $N'_{RE}$ as an integer.

Using $N'_{RE}$, the UE then determines a total number of REs allocated for PUSCH ($N_{RE}$). For cases where a single slot is used with respect to the TBS calculation, $N_{RE}$ may be calculated using:

$$N_{RE} = min\left( 156 \cdot P, N'_{RE} \right) \cdot n_{subPRB},$$

where $n_{subPRB}$ is a number of sub-PRBs allocated for the UE.

For cases of transport block processing over multiple slots, $N_{RE}$ may be calculated using:

$$N_{RE} = N \cdot min\left( 156 \cdot P, N'_{RE} \right) \cdot n_{subPRB},$$

where $N$ is the number of slots for the TBS.

Flooring, ceiling, and/or or rounding operations may then be used on $N_{RE}$ to keep $N_{RE}$ as an integer.

A mechanism for determining the number of REs allocated within PUSCH under a type 1 resource allocation mechanism as described herein is now discussed.

The UE first determines $N'_{RE}$ using:

$$N'_{RE} = \left( N^{RB}_{sc} \cdot N^{sh}_{symb} - N^{PRB}_{DMRS} - N^{PRB}_{oh} \right) / N^{RB}_{subRB},$$

where:

$N^{RB}_{sc}$ is a per-PRB number of subcarriers in a frequency domain;

$N^{sh}_{symb}$ is a number of symbols for the PUSCH;

$N^{PRB}_{DMRS}$ is a per-PRB number of REs used for demodulation reference signals (DM-RSs);

$N^{PRB}_{oh}$ is a per-PRB configured overhead in number of REs; and

$N^{RB}_{subRB}$ is the number of sub-PRBs in a single PRB.

Flooring, ceiling, and/or or rounding operations may then be used on $N'_{RE}$ to keep $N'_{RE}$ as an integer.

Using $N'_{RE}$, the UE then determines a total number of REs allocated for PUSCH ($N_{RE}$). For cases where a single slot is used with respect to the TBS calculation, $N_{RE}$ may be calculated using:

$$N_{RE} = min\left(156/N_{subRB}^{RB}, N_{RE}'\right) \cdot n_{subPRB},$$

where $n_{subPRB}$ is a number of sub-PRBs allocated for the UE.

For cases of transport block processing over multiple slots, $N_{RE}$ may be calculated using:

$$N_{RE} = N \cdot min\left(156/N_{subRB}^{RB}, N_{RE}'\right) \cdot n_{subPRB},$$

where $N$ is the number of slots for the TBS.

Flooring, ceiling, and/or or rounding operations may then be used on $N_{RE}$ to keep $N_{RE}$ as an integer.

Once $N_{RE}$ is known to the UE (e.g., according to either the type 0 allocation mode formulas or the type 1 allocation formulas, as the case may be), remaining steps for concluding the TBS determination using $N_{RE}$ may follow existing/-known mechanisms (*for example, refer to* second, third and fourth steps of Section 5.1.3.2 of 3GPP TS 38.214).

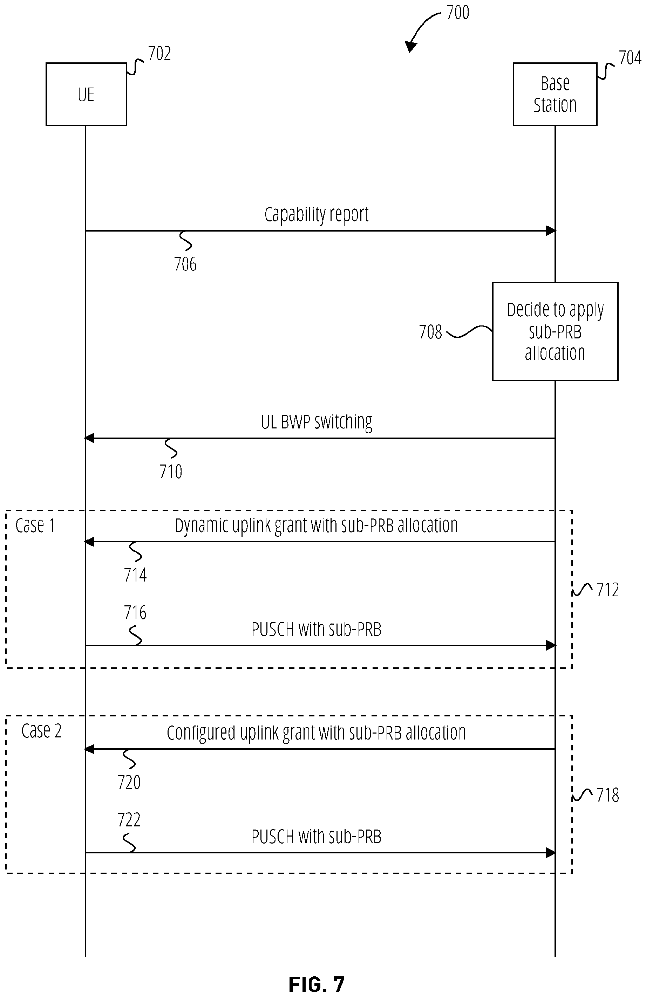

FIG. 7 illustrates a flow diagram 700 corresponding to the use of uplink multiplexing on a sub-PRB basis in the frequency domain, according to various embodiments discussed herein.

The flow diagram 700 illustrates communications between a UE 702 and a base station 704. It may be that the UE 702 and the base station 704 communicate over a service link of an NTN. Further, while the flow diagram 700 illustrates only a single UE 702, it should be understood that, for example, the base station 704 performs analogous communication as to that to be described in relation to the UE 702 with multiple UEs (in addition to the UE 702), with the end result that each of these multiple UEs is configured with a different allocation of sub-PRB(s) such that frequency domain multiplexing occurs/is in place with respect to UL transmissions by each of these multiple UEs.

It may be that the UE 702 sends 706 a capability message that reports one or more capabilities of the UE 702 to the base station 704. Using the information in the capability message, the UE may indicate its capability of using sub-PRB frequency domain allocations for its uplink transmissions with the base station 704 over the service link. In some cases, there may be a separate capability reporting within the capability message for each of a PUSCH and a physical uplink control channel (PUCCH) (e.g., the UE 702 may report that it can send one of a PUSCH and a PUCCH over the service link using a sub-PRB frequency domain allocation, but may not report that it can send (or may affirmatively report that it cannot send) the other of the PUCCH and the PUCCH over the service link using a sub-PRB frequency domain allocation).

Then, base station 704 decides 708 to configure one or more of the UEs (e.g., including the UE 702) to use sub-PRB based frequency domain allocations over the service link.

For example, the base station 704 may decide 708 to configure a UE (e.g., including the UE 302) to use sub-PRB based frequency domain allocations over the service link if a network congestion level is high.

Alternatively and/or additionally, the base station 704 may decide 708 to configure a UE (e.g., the UE 702) to use sub-PRB based frequency domain allocations over the service link if the UE has reported that it is capable of doing so (e.g., using a capability message as described).

Alternatively and/or additionally, the base station 704 may decide 708 whether to configure a UE (e.g., the UE 702) to use sub-PRB based frequency domain allocations over the service link based on a number of PRBs for an uplink transmission of the UE.

Alternatively and/or additionally, the base station 704 may decide 708 whether to configure a UE (e.g., the UE 702) to use sub-PRB based frequency domain allocations over the service link based on a number of repetitions for an uplink transmission of the UE.

Alternatively and/or additionally, the base station 704 may decide 708 whether to configure a UE (e.g., the UE 702) to use sub-PRB based frequency domain allocations over the service link based on a starting slot of an uplink transmission of the UE.

Alternatively and/or additionally, the base station 704 may decide 708 to configure a UE (e.g., the UE 702) to use sub-PRB based frequency domain allocations over the service link based on a timing advance (TA) value reported by the UE. For example, in a case where two UEs report similar TA values, they may be configured to share the same time resources for respective UL transmissions, with each UE using separate sub-PRB frequency resources.

Alternatively and/or additionally, the base station 704 may decide 708 whether to configure a UE (e.g., the UE 702) to use sub-PRB based frequency domain allocations over the service link based on whether demodulation reference signal (DMRS) bundling is applied at the UE. For example, it may be that if a UE uses DMRS bundling, then the base station 704 determines not to use sub-PRB based frequency domain allocations over the service link for uplink multiplexing at that UE.

The base station 704 may further configure 710 the UE 702 for any desired UL BWP switching, as illustrated.

Then, in a first case 712, the base station 704 sends 714 the UE 702 a dynamic uplink grant that provides a sub-PRB resource allocation for a PUSCH. The UE 702 accordingly sends 716 the base station 704 the PUSCH using the sub-PRB based resource allocation according to the dynamic uplink grant.

Alternatively to the first case 712, in a second case 718, the base station 704 sends 720 the UE 702 a configured uplink grant that indicates that the UE 702 is to use a sub-PRB resource allocation for a PUSCH. The UE 702 accordingly sends 722 the base station 704 the PUSCH using the sub-PRB based resource allocation according to the configured uplink grant.

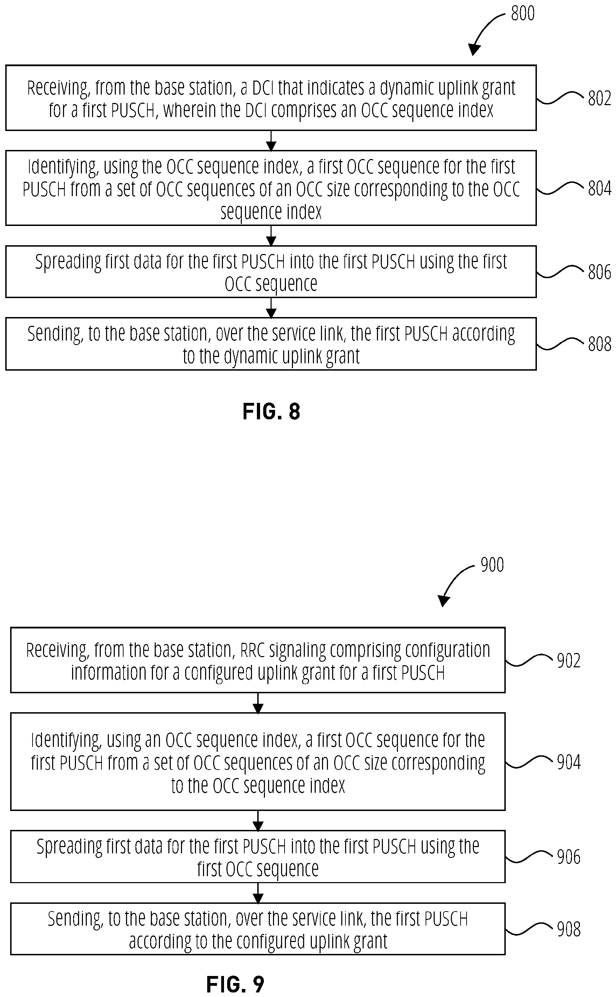

FIG. 8 illustrates a method 800 of a UE of a NTN that communicates with a base station over a service link of the NTN, according to embodiments herein. The illustrated method 800 includes receiving 802, from the base station, a DCI that indicates a dynamic uplink grant for a first PUSCH, wherein the DCI comprises an OCC sequence index. The method 800 further includes identifying 804, using the OCC sequence index, a first OCC sequence for the first PUSCH from a set of OCC sequences of an OCC size corresponding to the OCC sequence index. The method 800 further includes spreading 806 first data for the first PUSCH into the first PUSCH using the first OCC sequence. The method 800 further includes sending 808, to the base station, over the service link, the first PUSCH according to the dynamic uplink grant.

In some embodiments, the method 800 further comprises sending, to the base station, a capability message indicating that the UE is capable of performing OCC spreading for uplink transmissions on the service link.

In some embodiments of the method 800, the DCI further comprises an indication of the OCC size corresponding to the first OCC sequence.

In some embodiments, the method 800 further comprises receiving, from the base station, RRC signaling indicating the OCC size corresponding to the first OCC sequence index.

In some embodiments of the method 800, the dynamic uplink grant is further for a second PUSCH, and the method 800 further comprises spreading second data for the second PUSCH into the second PUSCH using the first OCC sequence, and sending, to the base station, over the service link, the second PUSCH.

In some embodiments of the method 800, the dynamic uplink grant is further for a second PUSCH, and the method 800 further comprises identifying a second OCC sequence for the second PUSCH from the set of OCC sequences of the OCC size, spreading second data for the second PUSCH into the second PUSCH using the second OCC sequence, and sending, to the base station, over the service link, the second PUSCH. In some such embodiments, the second OCC sequence is a next OCC sequence after the first OCC sequence in the set of OCC sequences of the OCC size. In some other such embodiments, the second OCC sequence is identified from the set of OCC sequences of the OCC size by applying an offset with respect to the first OCC sequence in the set of OCC sequences of the OCC size.

In some embodiments of the method 800, the UE is configured for PUSCH repetition, and the method 800 further comprises spreading the first data into a repetition of the first PUSCH using the first OCC sequence, and sending, to the base station, over the service link, the repetition of the first PUSCH.

In some embodiments of the method 800, the UE is configured for PUSCH repetition, and the method 800 further comprises identifying a second OCC sequence for a repetition of the first PUSCH from the set of OCC sequences of the OCC size, spreading the first data into the repetition of the first PUSCH using the second OCC sequence, and sending, to the base station, over the service link, the repetition of the first PUSCH. In some such embodiments, the second OCC sequence is a next OCC sequence after the first OCC sequence in the set of OCC sequences of the OCC size. In some other such embodiments, the second OCC sequence is identified from the set of OCC sequences of the OCC size by applying an offset with respect to the first OCC sequence in the set of OCC sequences of the OCC size.

In some embodiments of the method 800, a plurality of PRBs is used for the first PUSCH, and the first data for the first PUSCH is spread into a first PRB of the plurality of PRBs using the first OCC sequence, and the method 800 further comprises spreading second data for the first PUSCH into a second PRB of the plurality of PRBs using the first OCC sequence.

In some embodiments of the method 800, a plurality of PRBs are used for the first PUSCH, and the first data for the first PUSCH is spread into a first PRB of the plurality of PRBs using the first OCC sequence, and the method 800 further comprises identifying a second OCC sequence for a second PRB of the plurality of PRBs from the set of OCC sequences of the OCC size, and spreading second data for the first PUSCH into the second PRB using the second OCC sequence. In some such embodiments, the second OCC sequence is a next OCC sequence after the first OCC sequence in the set of OCC sequences of the OCC size. In some other such embodiments, the second OCC sequence is identified from the set of OCC sequences of the OCC size by applying an offset with respect to the first OCC sequence in the set of OCC sequences of the OCC size.

In some embodiments of the method 800, the UE is configured for to use a frequency hopping for the first PUSCH, and the first data for the first PUSCH is spread into a no-hop of the frequency hopping using the first OCC sequence; and the method 800 further comprises spreading second data for the first PUSCH into a first hop of the frequency hopping using the first OCC sequence, and spreading third data for the first PUSCH into a second hop of the frequency hopping using the first OCC sequence.

In some embodiments of the method 800, the UE is configured to use frequency hopping for the first PUSCH, and the first data for the first PUSCH is spread into a no-hop of the frequency hopping using the first OCC sequence; and the method 800 further comprises identifying a second OCC sequence for a first hop of the frequency hopping from the set of OCC sequences of the OCC size, spreading second data for the first PUSCH into the first hop using the second OCC sequence, identifying a third OCC sequence for a second hop of the frequency hopping from the set of OCC sequences of the OCC size, and spreading third data for the first PUSCH into the second hop using the third OCC sequence. In some such embodiments, the second OCC sequence is a first next OCC sequence after the first OCC sequence in the set of OCC sequences of the OCC size, and the third OCC sequence is a second next OCC sequence after the second OCC sequence in the set of OCC sequences of the OCC size. In some other such embodiments, the second OCC sequence is identified from the set of OCC sequences of the OCC size by applying a first offset with respect to the first OCC sequence in the set of OCC sequences of the OCC size, and the third OCC sequence is identified from the set of OCC sequences of the OCC size by applying a second offset with respect to the first OCC sequence in the set of OCC sequences of the OCC size.

FIG. 9 illustrates a method 900 of a UE of a NTN that communicates with a base station over a service link of the NTN, according to embodiments herein. The illustrated method 900 includes receiving 902, from the base station, RRC signaling comprising configuration information for a configured uplink grant for a first PUSCH. The method 900 further includes identifying 904, using an OCC sequence index, a first OCC sequence for the first PUSCH from a set of OCC sequences of an OCC size corresponding to the OCC sequence index. The method 900 further includes spreading 906 first data for the first PUSCH into the first PUSCH using the first OCC sequence. The method 900 further includes sending 908, to the base station, over the service link, the first PUSCH according to the configured uplink grant.

In some embodiments, the method 900 further comprises sending, to the base station, a capability message indicating that the UE is capable of performing OCC spreading for uplink transmissions on the service link.

In some embodiments of the method 900, the configuration information for the configured uplink grant comprises the OCC sequence index and the OCC size.

In some embodiments, the method 900 further comprises receiving, from the base station, a DCI that activates the configured uplink grant for use according to the configuration information. In some such embodiments, the configuration information for the configured uplink grant comprises the OCC size, and the DCI comprises the OCC sequence index. In some other such embodiments, the DCI comprises the OCC sequence index and the OCC size.

In some embodiments of the method 900, the UE is configured for PUSCH repetition, and the method 900 further comprises spreading the first data into a repetition of the first PUSCH using the first OCC sequence; and sending, to the base station, over the service link, the repetition of the first PUSCH.

In some embodiments of the method 900, the UE is configured for PUSCH repetition, and the method 900 further comprises identifying a second OCC sequence for a repetition of the first PUSCH from the set of OCC sequences of the OCC size, spreading the first data into the repetition of the first PUSCH using the second OCC sequence, and sending, to the base station, over the service link, the repetition of the first PUSCH. In some such embodiments, the second OCC sequence is a next OCC sequence after the first OCC sequence in the set of OCC sequences of the OCC size. In some other such embodiments, the second OCC sequence is identified from the set of OCC sequences of the OCC size by applying an offset with respect to the first OCC sequence in the set of OCC sequences of the OCC size.

In some embodiments of the method 900, a plurality of PRBs is used for the first PUSCH, and the first data for the first PUSCH is spread into a first PRB of the plurality of PRBs using the first OCC sequence, and the method 900 further comprises spreading second data for the first PUSCH into a second PRB of the plurality of PRBs using the first OCC sequence.

In some embodiments of the method 900, a plurality of PRBs are used for the first PUSCH, and the first data for the first PUSCH is spread into a first PRB of the plurality of PRBs using the first OCC sequence, and the method 900 further comprises identifying a second OCC sequence for a second PRB of the plurality of PRBs from the set of OCC sequences of the OCC size, and spreading second data for the first PUSCH into the second PRB using the second OCC sequence. In some such embodiments, the second OCC sequence is a next OCC sequence after the first OCC sequence in the set of OCC sequences of the OCC size. In some other such embodiments, the second OCC sequence is identified from the set of OCC sequences of the OCC size by applying an offset with respect to the first OCC sequence in the set of OCC sequences of the OCC size.

In some embodiments of the method 900, the UE is configured for to use a frequency hopping for the first PUSCH, and the first data for the first PUSCH is spread into a no-hop of the frequency hopping using the first OCC sequence; and the method 900 further comprises spreading second data for the first PUSCH into a first hop of the frequency hopping using the first OCC sequence, and spreading third data for the first PUSCH into a second hop of the frequency hopping using the first OCC sequence.

In some embodiments of the method 900, the UE is configured to use frequency hopping for the first PUSCH, and the first data for the first PUSCH is spread into a no-hop of the frequency hopping using the first OCC sequence; and the method 900 further comprises identifying a second OCC sequence for a first hop of the frequency hopping from the set of OCC sequences of the OCC size, spreading second data for the first PUSCH into the first hop using the second OCC sequence, identifying a third OCC sequence for a second hop of the frequency hopping from the set of OCC sequences of the OCC size, and spreading third data for the first PUSCH into the second hop using the third OCC sequence. In some such embodiments, the second OCC sequence is a first next OCC sequence after the first OCC sequence in the set of OCC sequences of the OCC size, and the third OCC sequence is a second next OCC sequence after the second OCC sequence in the set of OCC sequences of the OCC size. In some other such embodiments, the second OCC sequence is identified from the set of OCC sequences of the OCC size by applying a first offset with respect to the first OCC sequence in the set of OCC sequences of the OCC size, and the third OCC sequence is identified from the set of OCC sequences of the OCC size by applying a second offset with respect to the first OCC sequence in the set of OCC sequences of the OCC size.

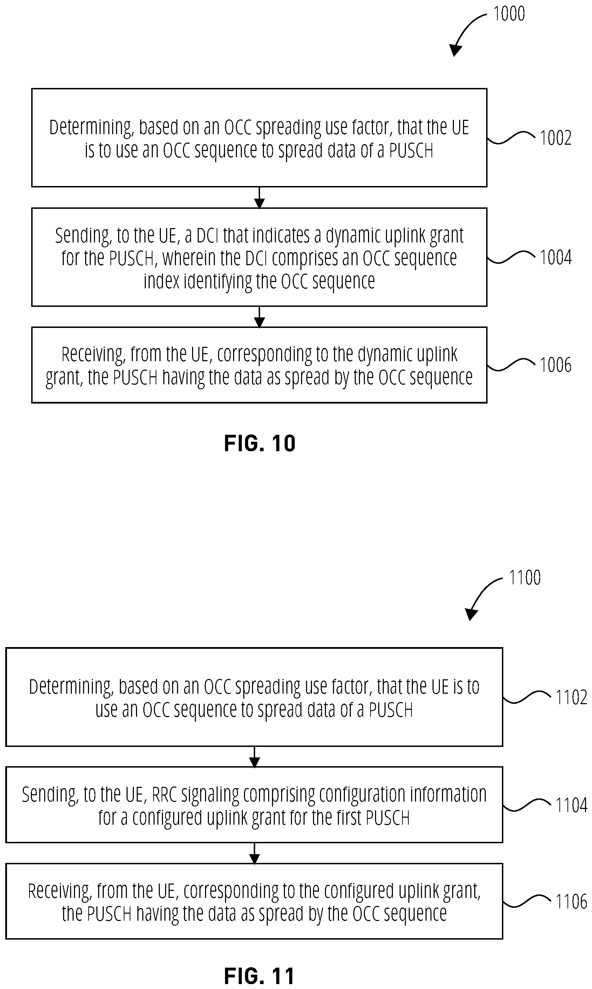

FIG. 10 illustrates a method 1000 of base station of a NTN that communicates with a first UE over a service link of the NTN, according to embodiments herein. The illustrated method 1000 includes determining 1002, based on an OCC spreading use factor, that the UE is to use an OCC sequence to spread data of a PUSCH. The method 1000 further includes sending 1004, to the UE, a DCI that indicates a dynamic uplink grant for the PUSCH, wherein the DCI comprises an OCC sequence index identifying the OCC sequence. The method 1000 further includes receiving 1006, from the UE, corresponding to the dynamic uplink grant, the PUSCH having the data as spread by the OCC sequence.

In some embodiments, the method 1000 further comprises receiving, from the first UE, a capability message indicating that the first UE is capable of performing OCC spreading for uplink transmissions on the service link.

In some embodiments of the method 1000, the DCI further comprises an indication of an OCC size corresponding to the first OCC sequence.

In some embodiments, the method 1000 further comprises sending, to the UE, RRC signaling indicating the OCC size corresponding to the first OCC sequence index.

In some embodiments of the method 1000, the OCC spreading use factor comprises a network congestion level.

In some embodiments of the method 1000, the OCC spreading use factor comprises a determination that the first UE is capable of performing OCC spreading.

In some embodiments of the method 1000, the OCC spreading use factor comprises a number of PRBs to be used for the PUSCH.

In some embodiments of the method 1000, the OCC spreading use factor comprises a number of PUSCH repetitions to be used for the PUSCH.

In some embodiments of the method 1000, the OCC spreading use factor comprises a starting slot of the PUSCH.

In some embodiments of the method 1000, the OCC spreading use factor comprises a comparison between a first TA report from the first UE and a second TA report from a second UE.

In some embodiments of the method 1000, the OCC spreading use factor comprises a determination that DMRS bundling across multiple slots is not used for communication with the first UE.

FIG. 11 illustrates a method 1100 of a base station of a NTN that communicates with a first UE over a service link of the NTN, according to embodiments herein. The illustrated method 1100 includes determining 1102, based on an OCC spreading use factor, that the UE is to use an OCC sequence to spread data of a PUSCH. The method 1100 further includes sending 1104, to the UE, RRC signaling comprising configuration information for a configured uplink grant for the first PUSCH. The method 1100 further includes receiving 1106, from the UE, corresponding to the configured uplink grant, the PUSCH having the data as spread by the OCC sequence.

In some embodiments, the method 1100 further comprises receiving, from the first UE, a capability message indicating that the first UE is capable of performing OCC spreading for uplink transmissions on the service link.

In some embodiments of the method 1100, the configuration information for the configured uplink grant comprises an OCC sequence index and an OCC size.

In some embodiments, the method 1100 further comprises sending, to the first UE, a DCI that activates the configured uplink grant for use according to the configuration information. In some such embodiments, the configuration information for the configured uplink grant comprises an OCC size, and the DCI comprises an OCC sequence index. In some other such embodiments, the DCI comprises an OCC sequence index and an OCC size.

In some embodiments of the method 1100, the OCC spreading use factor comprises a network congestion level.

In some embodiments of the method 1100, the OCC spreading use factor comprises a determination that the first UE is capable of performing OCC spreading.

In some embodiments of the method 1100, the OCC spreading use factor comprises a number of PRBs to be used for the PUSCH.

In some embodiments of the method 1100, the OCC spreading use factor comprises a number of PUSCH repetitions to be used for the PUSCH.

In some embodiments of the method 1100, the OCC spreading use factor comprises a starting slot of the PUSCH.

In some embodiments of the method 1100, the OCC spreading use factor comprises a comparison between a first TA report from the first UE and a second TA report from a second UE.

In some embodiments of the method 1100, the OCC spreading use factor comprises a determination that DMRS bundling across multiple slots is not used for communication with the first UE.

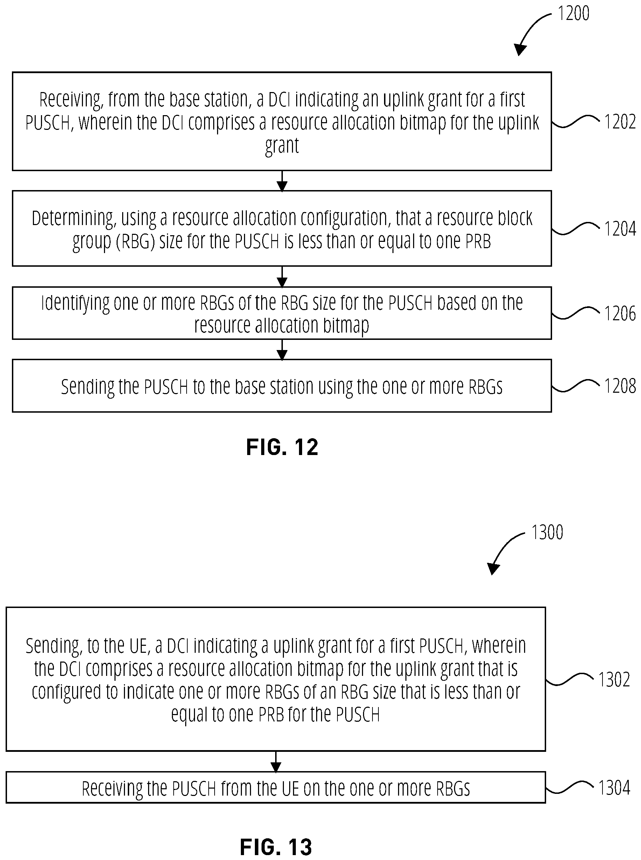

FIG. 12 illustrates a method 1200 of a UE of a NTN that communicates with a base station over a service link of the NTN, according to embodiments herein. The illustrated method 1200 includes receiving 1202, from the base station, a DCI indicating an uplink grant for a first PUSCH, wherein the DCI comprises a resource allocation bitmap for the uplink grant. The method 1200 further includes determining 1204, using a resource allocation configuration, that a RBG size for the PUSCH is less than or equal to one PRB. The method 1200 further includes identifying 1206 one or more RBGs of the RBG size for the PUSCH based on the resource allocation bitmap. The method 1200 further includes sending 1208 the PUSCH to the base station using the one or more RBGs.

In some embodiments, the method 1200 further comprises sending, to the base station, a capability message indicating that the UE is capable of using the RBG size that is less than or equal to one PRB.

In some embodiments, the method 1200 further comprises, determining a BWP size of a BWP for the uplink grant, wherein the determining, using the resource allocation configuration, that the RBG size for the PUSCH is less than or equal to one PRB comprises applying the BWP size of the BWP to the resource allocation configuration.

In some embodiments of the method 1200, the RBG size for the PUSCH is one half of a PRB.

In some embodiments of the method 1200, the RBG size for the PUSCH is one third of a PRB.

In some embodiments of the method 1200, the RBG size for the PUSCH is one fourth of a PRB.

In some embodiments of the method 1200, the RBG size for the PUSCH is one PRB.

In some embodiments of the method 1200, the uplink grant is a configured uplink grant, and the method 1200 further comprises receiving, from the base station, a configured grant configuration for the configured uplink grant that indicates the use of the resource allocation configuration.

In some embodiments, the method 1200 further comprises, receiving, from the base station, a UE-specific PUSCH configuration for the PUSCH that indicates the use of the resource.

In some embodiments, the method 1200 further comprises, determining a first number of REs allocated for the PUSCH within each of the one or more RBGs based on the RBG size for the PUSCH that is less than or equal to one PRB, determining a total number of REs allocated for the PUSCH based on the first number of REs allocated for the PUSCH within each of the one or more RBGs, and determining a TBS of the PUSCH based on the total number of REs allocated for the PUSCH. In some such embodiments, the first number of REs allocated for the PUSCH within each of the one or more RBGs is determined according to: $N'_{RE} = \left( N_{sc}^{RB} \cdot N_{symb}^{sh} - N_{DMRS}^{PRB} - N_{oh}^{PRB} \right) \cdot P$, where: $N'_{RE}$ is the first number of REs allocated for the PUSCH within each of the one or more RBGs, $N_{sc}^{RB}$ is a per-PRB number of subcarriers in a frequency domain, $N_{symb}^{sh}$ is a number of symbols for the PUSCH, $N_{DMRS}^{PRB}$ is a second number of REs that is a per-PRB number of REs used for DM-RSs, $N_{oh}^{PRB}$ is a third number of REs that is a per-PRB configured overhead, and $P$ is the RBG size for the PUSCH that is less than or equal to one PRB as expressed in PRB terms. In some other such embodiments, the UE is indicated to use a plurality of slots for a transport block size calculation, and wherein the second number of REs that is the total number of REs allocated for the PUSCH is determined according to: $N_{RE} = N \cdot min \left( 156 \cdot P, N'_{RE} \right) \cdot n_{subPRB}$, where: $N_{RE}$ is the total number of REs allocated for the PUSCH, $N$ is a number of the plurality of slots for the transport block size calculation, P is the RBG size for the PUSCH that is less than or equal to one PRB as expressed in PRB terms, $N'_{RE}$ is the first number of REs allocated for the PUSCH within each of the one or more RBGs, and $n_{subPRB}$ is a number of sub-PRBs allocated for the UE. In some further other such embodiments, the second number of REs that is the total number of REs allocated for the PUSCH is determined according to: $N_{RE} = min \left( 156 \cdot P, N'_{RE} \right) \cdot n_{subPRB}$, where: $N_{RE}$ is the total number of REs allocated for the PUSCH, P is the RBG size for the PUSCH that is less than or equal to one PRB as expressed in PRB terms, $N'_{RE}$ is the first number of REs allocated for the PUSCH within each of the one or more RBGs, and $n_{subPRB}$ is a number of sub-PRBs allocated for the UE.

FIG. 13 illustrates a method 1300 of a base station of a NTN that communicates with a UE over a service link of the NTN, according to embodiments herein. The illustrated method 1300 includes sending 1302, to the UE, a DCI indicating an uplink grant for a first PUSCH, wherein the DCI comprises a resource allocation bitmap for the uplink grant that is configured to indicate one or more RBGs of an RBG size that is less than or equal to one PRB for the PUSCH. The method 1300 further includes receiving 1304 the PUSCH from the UE on the one or more RBGs.

In some embodiments, the method 1300 further comprises receiving, from the UE, a capability message indicating that the UE is capable of using the RBG size that is less than or equal to one PRB.

In some embodiments of the method 1300, the RBG size for the PUSCH is one half of a PRB.

In some embodiments of the method 1300, the RBG size for the PUSCH is one third of a PRB.

In some embodiments of the method 1300, the RBG size for the PUSCH is one fourth of a PRB.

In some embodiments of the method 1300, the RBG size for the PUSCH is one PRB.

In some embodiments of the method 1300, the uplink grant is a configured uplink grant, and further comprising sending, to the UE, a configured grant configuration for the configured uplink grant that indicates the use of the resource allocation configuration.

In some embodiments, the method 1300 further comprises sending, to the UE, a UE-specific PUSCH configuration for the PUSCH that indicates the use of the resource allocation configuration.

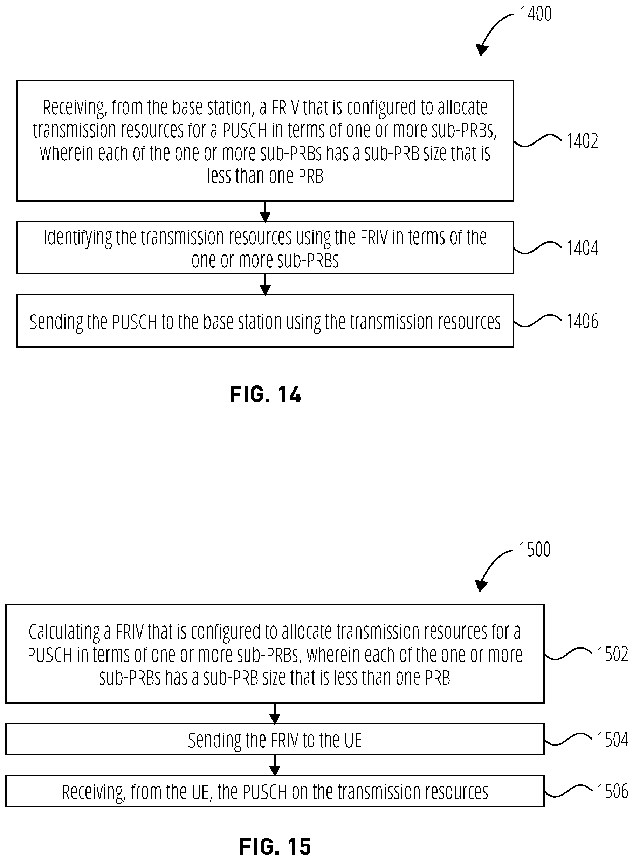

FIG. 14 illustrates a method 1400 of a UE of a NTN that communicates with a base station over a service link of the NTN, according to embodiments herein. The illustrated method 1400 includes receiving 1402, from the base station, a FRIV that is configured to allocate transmission resources for a PUSCH in terms of one or more sub-PRBs, wherein each of the one or more sub-PRBs has a sub-PRB size that is less than one PRB. The method 1400 further includes identifying 1404 the transmission resources using the FRIV in terms of the one or more sub-PRBs. The method 1400 further includes sending 1406 the PUSCH to the base station using the transmission resources.

In some embodiments of the method 1400, the FRIV corresponds to the formula:

$$RIV = N_{BWP}^{size} \cdot N_{subRB}^{RB} \cdot \left(L_{subRBs} - 1\right) + subRB_{start}$$, where: *RIV* is the FRIV; $N_{BWP}^{size}$ is a size of a bandwidth part (BWP) for the PUSCH; $N_{subRB}^{RB}$ is a ratio of the PRB size to the sub-PRB size; $L_{subRBs}$ is a length of the transmission resources in units of sub-PRBs; and $subRB_{start}$ is a location of a first sub-PRB of the transmission resources.

In some embodiments of the method 1400, the FRIV corresponds to the formula:

$$RIV = N_{BWP}^{size} \cdot N_{subRB}^{RB} \cdot \left(N_{BWP}^{size} \cdot N_{subRB}^{RB} - L_{subRB} + 1\right) + \left(N_{BWP}^{size} \cdot N_{subRB}^{RB} - 1 - subRB_{start}\right)$$,

where: *RIV* is the FRIV; $N_{BWP}^{size}$ is a size of a bandwidth part (BWP) for the PUSCH; $N_{subRB}^{RB}$ is a ratio of the PRB size to the sub-PRB size; $L_{subRBs}$ is a length of the transmission resources in units of sub-PRBs; and $subRB_{start}$ is a location of a first sub-PRB of the transmission resources.

In some embodiments of the method 1400, the sub-PRB size is one half of a PRB.

In some embodiments of the method 1400, the sub-PRB size is one third of a PRB.

In some embodiments of the method 1400, the sub-PRB size is one fourth of a PRB.

In some embodiments, the method 1400 further comprises determining a first number of REs allocated for the PUSCH within each of the one or more sub-PRBs based on a ratio of a PRB size to the sub-PRB size, and determining a total number of REs allocated for the PUSCH based on the first number of REs allocated for the PUSCH within each of the one or more sub-PRBs, and determining a TBS of the PUSCH based on the total number of REs allocated for the PUSCH. In some such embodiment, the first number of REs allocated for the PUSCH within each of the one or more sub-PRBs is determined according to: $N_{RE}' = \left(N_{sc}^{RB} \cdot N_{symb}^{sh} - N_{DMRS}^{PRB} - N_{oh}^{PRB}\right) / N_{subRB}^{RB}$, where: $N_{RE}'$ is the first number of REs allocated for the PUSCH within each of the one or more sub-PRBs, $N_{sc}^{RB}$ is a per-PRB number of subcarriers in a frequency domain, $N_{symb}^{sh}$ is a number of symbols for the PUSCH, $N_{DMRS}^{PRB}$ is a second number of REs that is a per-PRB number of REs used for DM-RSs, $N_{oh}^{PRB}$ is a third number of REs that is a per-PRB configured overhead, and $N_{subRB}^{RB}$ is the ratio of the PRB size to the sub-PRB size. In some other such embodiments, the UE is indicated to use a plurality of slots for a transport block size calculation, and wherein the second number of REs that is the total number of REs allocated for the PUSCH is determined according to:

$$N_{RE} = N \cdot min\left(156/N_{subRB}^{RB}, N_{RE}'\right) \cdot n_{subPRB}$$, where: $N_{RE}$ is the total number of REs allocated for the PUSCH, *N* is a number of the plurality of slots for the transport block size calculation, $N_{subRB}^{RB}$ is the ratio of the PRB size to the sub-PRB size, $N_{RE}'$ is the first number of REs allocated for the PUSCH within each of the one or more sub-PRBs, and $n_{subPRB}$ is a number of sub-PRBs allocated for the UE. In some further other such embodiments, the second number of REs that is the total number of REs allocated for the PUSCH is determined according to:

$$N_{RE} = min\left(156/N_{subRB}^{RB}, N_{RE}'\right) \cdot n_{subPRB}$$, where: $N_{RE}$ is the total number of REs allocated for the PUSCH,

$N_{subRB}^{RB}$ is the ratio of the PRB size to the sub-PRB size, $N_{RE}'$ is the first number of REs allocated for the PUSCH within each of the one or more sub-PRBs, and $n_{subPRB}$ is a number of sub-PRBs allocated for the UE.

FIG. 15 illustrates a method 1500 of a base station of a NTN that communicates with a first UE over a service link of the NTN, according to embodiments herein. The illustrated method 1500 includes calculating 1502 a FRIV that is configured to allocate transmission resources for a PUSCH in terms of one or more sub-PRBs, wherein each of the one or more sub-PRBs has a sub-PRB size that is less than one PRB. The method 1500 further includes sending 1504, the FRIV to the UE. The method 1500 further includes receiving 1506, from the UE, the PUSCH on the transmission resources.

In some embodiments of the method 1500, the FRIV is calculated according to:

$$RIV = N_{BWP}^{size} \cdot N_{subRB}^{RB} \cdot \left(L_{subRBs} - 1\right) + subRB_{start}$$ , where: $RIV$ is the FRIV, $N_{BWP}^{size}$ is a size of a BWP for the PUSCH, $N_{subRB}^{RB}$ is a ratio of the PRB size to the sub-PRB size, $L_{subRBs}$ is a length of the transmission resources in units of sub-PRBs, and $subRB_{start}$ is a location of a first sub-PRB of the transmission resources.

In some embodiments of the method 1500, the FRIV is calculated according to:

$$RIV = N_{BWP}^{size} \cdot N_{subRB}^{RB} \cdot \left(N_{BWP}^{size} \cdot N_{subRB}^{RB} - L_{subRB} + 1\right) + \left(N_{BWP}^{size} \cdot N_{subRB}^{RB} - 1 - subRB_{start}\right)$$ ,

where: $RIV$ is the FRIV; $N_{BWP}^{size}$ is a size of a bandwidth part (BWP) for the PUSCH; $N_{subRB}^{RB}$ is a ratio of the PRB size to the sub-PRB size; $L_{subRBs}$ is a length of the transmission resources in units of sub-PRBs; and $subRB_{start}$ is a location of a first sub-PRB of the transmission resources.

In some embodiments of the method 1500, the sub-PRB size is one half of a PRB.

In some embodiments of the method 1500, the sub-PRB size is one third of a PRB.

In some embodiments of the method 1500, the sub-PRB size is one fourth of a PRB.

FIG. 16 illustrates an example architecture of a wireless communication system 1600, according to embodiments disclosed herein. The following description is provided for an example wireless communication system 1600 that operates in conjunction with the LTE system standards and/or 5G or NR system standards as provided by 3GPP technical specifications and other 3GPP documents.

As shown by FIG. 16, the wireless communication system 1600 includes UE 1602 and UE 1604 (although any number of UEs may be used). In this example, the UE 1602 and the UE 1604 are illustrated as smartphones (e.g., handheld touchscreen mobile computing devices connectable to one or more cellular networks), but may also comprise any mobile or non-mobile computing device configured for wireless communication.

The UE 1602 and UE 1604 may be configured to communicatively couple with a RAN 1606. In embodiments, the RAN 1606 may be NG-RAN, E-UTRAN, etc. The UE 1602 and UE 1604 utilize connections (or channels) (shown as connection 1608 and connection 1610, respectively) with the RAN 1606, each of which comprises a physical communications interface. The RAN 1606 can include one or more base stations (such as terrestrial base station 1612, the terrestrial base station 1614 the satellite base station 1636 and the satellite base station 1638) and/or other entities (e.g., the satellite 1642, which may not have base station functionality) that enable the connection 1608 and connection 1610. One or more satellite gateways 1634 may integrate the satellite base station 1636, satellite base station 1638, and/or the satellite 1642 into the RAN 1606, in the manners (and with the appropriate elements) described in relation to the NTN architecture 100 of FIG. 1 and the NTN architecture 200 of FIG. 2.

It may be understood that, in alternative embodiments to FIG. 16, the satellite base station 1636, the satellite base station 1638, and/or the satellite 1642 may instead comprise a non-satellite NTN vehicle (e.g., an airplane, a UAV, a UAS, an airship, a balloon, etc.). Further, it may be understood in such alternative embodiments that any satellite gateway 1634 may be a gateway for or corresponding to that applicable NTN vehicle type.

In this example, the connection 1608 and connection 1610 are air interfaces to enable such communicative coupling, and may be consistent with RAT(s) used by the RAN 1606, such as, for example, an LTE and/or NR. It is contemplated that the connection 1608 and connection 1610 may include, in some embodiments, service links between their respective UE 1602, UE 1604 and one or more of the satellite base station 1636, the satellite base station 1638, and the satellite 1642.

In some embodiments, the UE 1602 and UE 1604 may also directly exchange communication data via a sidelink interface 1616.

The UE 1604 is shown to be configured to access an access point (shown as AP 1618) via connection 1620. By way of example, the connection 1620 can comprise a local wireless connection, such as a connection consistent with any IEEE 802.11 protocol, wherein the AP 1618 may comprise a Wi-Fi® router. In this example, the AP 1618 may be connected to another network (for example, the Internet) without going through a CN 1624.

In embodiments, the UE 1602 and UE 1604 can be configured to communicate using orthogonal frequency division multiplexing (OFDM) communication signals with each other, with the terrestrial base station 1612, the terrestrial base station 1614, the satellite base station 1636, the satellite base station 1638, and/or the satellite 1642 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the terrestrial base station 1612, terrestrial base station 1614, the satellite base station 1636 and/or the satellite base station 1638 may be implemented as one or more software entities running on server computers as part of a virtual network.

In addition, or in other embodiments, the terrestrial base station 1612 or terrestrial base station 1614 may be configured to communicate with one another via interface 1622. In embodiments where the wireless communication system 1600 is an LTE system (e.g., when the CN 1624 is an EPC), the interface 1622 may be an X2 interface. The X2 interface may be defined between two or more base stations (e.g., two or more eNBs and the like) that connect to an EPC, and/or between two eNBs connecting to the EPC. It is contemplated than an inter-satellite link (ISL) may carry the X2 interface between in the case of two satellite base stations.

In embodiments where the wireless communication system 1600 is an NR system (e.g., when CN 1624 is a 5GC), the interface 1622 may be an Xn interface. An Xn interface is defined between two or more base stations that connect to 5GC (e.g., CN 1624). For example, the Xn interface may be between two or more gNBs that connect to 5GC, a gNB connecting to 5GC and an eNB, between two eNBs connecting to 5GC, and/or two or more satellite base stations via an ISL (as in, e.g., the interface 1640 between the satellite base station 1636 and the satellite base station 1638).

The RAN 1606 is shown to be communicatively coupled to the CN 1624. The CN 1624 may comprise one or more network elements 1626, which are configured to offer various data and telecommunications services to customers/subscribers (e.g., users of UE 1602 and UE 1604) who are connected to the CN 1624 via the RAN 1606. The components of the CN 1624 may be implemented in one physical device or separate physical devices including components to read and execute instructions from a machine-readable or computer-readable medium (e.g., a non-transitory machine-readable storage medium). For example, the components of the CN 1624 may be implemented in one or more processors and/or one or more associated memories.

In embodiments, the CN 1624 may be an EPC, and the RAN 1606 may be connected with the CN 1624 via an S 1 interface 1628. In embodiments, the S1 interface 1628 may be split into two parts, an S1 user plane (S1-U) interface, which carries traffic data between the terrestrial base station 1612, terrestrial base station 1614, the satellite base station 1636, or the interface 1640 and a serving gateway (S-GW), and the S1-MME interface, which is a signaling interface between the terrestrial base station 1612, the terrestrial base station 1614, the satellite base station 1636, or the interface 1640 and mobility management entities (MMEs).

In embodiments, the CN 1624 may be a 5GC, and the RAN 1606 may be connected with the CN 1624 via an NG interface 1628. In embodiments, the NG interface 1628 may be split into two parts, an NG user plane (NG-U) interface, which carries traffic data between the terrestrial base station 1612, terrestrial base station 1614, satellite base station 1636, or satellite base station 1638 and a user plane function (UPF), and the S1 control plane (NG-C) interface, which is a signaling interface between the terrestrial base station 1612, terrestrial base station 1614 satellite base station 1636, or satellite base station 1638 and access and mobility management functions (AMFs).

Generally, an application server 1630 may be an element offering applications that use internet protocol (IP) bearer resources with the CN 1624 (e.g., packet switched data services). The application server 1630 can also be configured to support one or more communication services (e.g., VoIP sessions, group communication sessions, etc.) for the UE 1602 and UE 1604 via the CN 1624. The application server 1630 may communicate with the CN 1624 through an IP communications interface 1632.

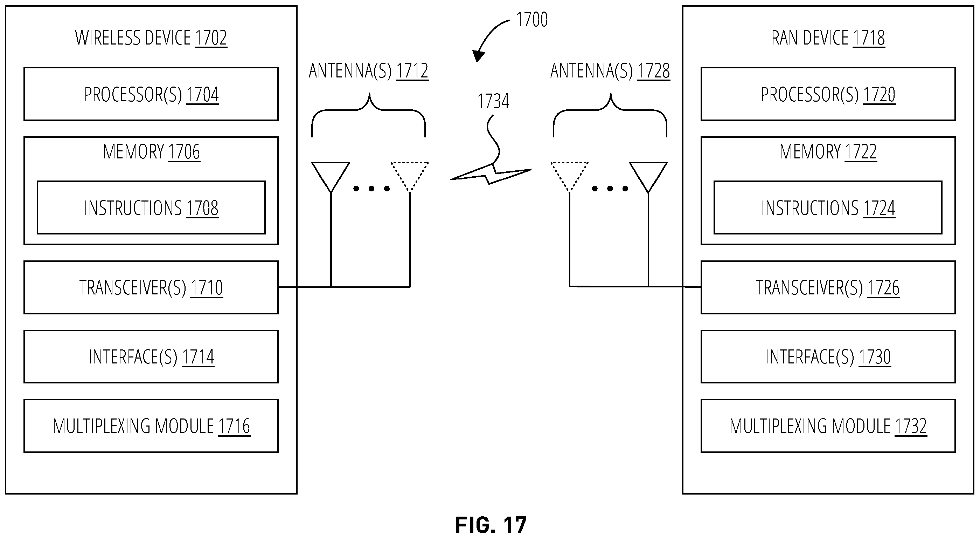

FIG. 17 illustrates a system 1700 for performing signaling 1734 between a wireless device 1702 and a RAN device 1718, according to embodiments disclosed herein. The system 1700 may be a portion of a wireless communications system as herein described. The wireless device 1702 may be, for example, a UE of a wireless communication system. The RAN device 1718 may be, for example, a base station (e.g., an eNB or a gNB) of a wireless communication system that is a terrestrial base station or that is a non-terrestrial base station sited on an NTN vehicle. In the case of a RAN device 1718 that is a terrestrial base station, the RAN device 1718 may be in communication with an NTN vehicle that directly provides radio access connectivity to the wireless device 1702 over a service link, in the manner described herein.

The wireless device 1702 may include one or more processor(s) 1704. The processor(s) 1704 may execute instructions such that various operations of the wireless device 1702 are performed, as described herein. The processor(s) 1704 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 1702 may include a memory 1706. The memory 1706 may be a non-transitory computer-readable storage medium that stores instructions 1708 (which may include, for example, the instructions being executed by the processor(s) 1704). The instructions 1708 may also be referred to as program code or a computer program. The memory 1706 may also store data used by, and results computed by, the processor(s) 1704.

The wireless device 1702 may include one or more transceiver(s) 1710 that may include an RF transmitter and/or receiver circuitry that use the antenna(s) 1712 of the wireless device 1702 to facilitate signaling (e.g., the signaling 1734) to and/or from the wireless device 1702 with other devices (e.g., the RAN device 1718) according to corresponding RATs. In some embodiments, the antenna(s) 1712 may include a moving parabolic antenna, an omni-directional phased-array antenna, or some other antenna suitable for communication with an NTN vehicle, (e.g., as described above in relation to the UE 110 of FIG. 1 and the UE 208 of FIG. 2).

For a RAN device 1718 that is a terrestrial base station, the network device signaling 1734 may occur on a service link between the wireless device 1702 and an NTN vehicle and a feeder link between the NTN vehicle and the RAN device 1718 (e.g., as described in relation to FIG. 1). For a RAN device 1718 that is a base station sited on an NTN vehicle, the signaling 1734 may occur on a service link between the wireless device 1702 and the RAN device 1718 (e.g., as described in relation to FIG. 2).

The wireless device 1702 may include one or more antenna(s) 1712 (e.g., one, two, four, or more). For embodiments with multiple antenna(s) 1712, the wireless device 1702 may leverage the spatial diversity of such multiple antenna(s) 1712 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 1702 may be accomplished according to precoding (or digital beamforming) that is applied at the wireless device 1702 that multiplexes the data streams across the antenna(s) 1712 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi-user MIMO (MU-MIMO) methods (where individual data streams may be directed to individual (different) receivers in different locations in the spatial domain).

In certain embodiments having multiple antennas, the wireless device 1702 may implement analog beamforming techniques, whereby phases of the signals sent by the antenna(s) 1712 are relatively adjusted such that the (joint) transmission of the antenna(s) 1712 can be directed (this is sometimes referred to as beam steering).

The wireless device 1702 may include one or more interface(s) 1714. The interface(s) 1714 may be used to provide input to or output from the wireless device 1702. For example, a wireless device 1702 that is a UE may include interface(s) 1714 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1710/antenna(s) 1712 already described) that allow for communication between the UE and other devices and may operate according to known protocols (e.g., Wi-Fi®, Bluetooth®, and the like).

The wireless device 1702 may include a multiplexing module 1716. The multiplexing module 1716 may be implemented via hardware, software, or combinations thereof. For example, the multiplexing module 1716 may be implemented as a processor, circuit, and/or instructions 1708 stored in the memory 1706 and executed by the processor(s) 1704. In some examples, the multiplexing module 1716 may be integrated within the processor(s) 1704 and/or the transceiver(s) 1710. For example, the multiplexing module 1716 may be implemented by a combination of software components (e.g., executed by a DSP or a general processor) and hardware components (e.g., logic gates and circuitry) within the processor(s) 1704 or the transceiver(s) 1710.

The multiplexing module 1716 may be used for various aspects of the present disclosure, for example, aspects of one or more of FIG. 8, FIG. 9, FIG. 12, and/or FIG. 14. The multiplexing module 1716 may configure the wireless device 1702 to, for example, receive, from the RAN device 1718, over a service link, a dynamic grant that triggers the use of OCC spreading at the wireless device 1702, receive configuration information for a configured grant for the wireless device 1702 that uses OCC spreading, perform the OCC spreading (e.g., of a PUSCH), and/or send the result to the RAN device 1718 over the service link, as discussed herein. The multiplexing module 1716 may additionally/alternatively configure the wireless device 1702 to, for example, receive, from the RAN device 1718, over a service link, a grant for a type 0 resource allocation (e.g., a bitmap) that allocates frequency domain resources on a sub-PRB basis and send corresponding signaling (e.g., a PUSCH) to the RAN device 1718 on the frequency domain resources that are so allocated on the service link, and/or, receive, from the RAN device 1718, over the service link, a grant for a type 1 resource allocation (e.g., an FRIV) that allocates frequency domain resources on a sub-PRB basis and sends corresponding signaling (e.g., a PUSCH) to the RAN device 1718 on the frequency domain resources that are so allocated over the service link, as discussed herein.

The RAN device 1718 may include one or more processor(s) 1720. The processor(s) 1720 may execute instructions such that various operations of the RAN device 1718 are performed, as described herein. The processor(s) 1704 may include one or more baseband processors implemented using, for example, a CPU, a DSP, an ASIC, a controller, an FPGA device, another hardware device, a firmware device, or any combination thereof configured to perform the operations described herein.

The RAN device 1718 may include a memory 1722. The memory 1722 may be a non-transitory computer-readable storage medium that stores instructions 1724 (which may include, for example, the instructions being executed by the processor(s) 1720). The instructions 1724 may also be referred to as program code or a computer program. The memory 1722 may also store data used by, and results computed by, the processor(s) 1720.

The RAN device 1718 may include one or more transceiver(s) 1726 that may include RF transmitter and/or receiver circuitry that use the antenna(s) 1728 of the RAN device 1718 to facilitate signaling (e.g., the signaling 1734) to and/or from the RAN device 1718 with other devices (e.g., the wireless device 1702) according to corresponding RATs.

The RAN device 1718 may include one or more antenna(s) 1728 (e.g., one, two, four, or more). In embodiments having multiple antenna(s) 1728, the RAN device 1718 may perform MIMO, digital beamforming, analog beamforming, beam steering, etc., as has been described.

For a RAN device 1718 that is a terrestrial base station, one or more of the transceiver(s) 1726 and/or the antenna(s) 1728 may instead be present on a satellite gateway (or a gateway for another applicable NTN vehicle type) associated with the base station (e.g., as shown in reference to the terrestrial base station 104 and the satellite gateway 106 of FIG. 1). For a RAN device 1718 that is a base station sited on an NTN vehicle, the transceiver(s) 1726 and/or the antenna(s) 1728 may be present on the NTN vehicle, and one or more of those antenna(s) 1728 may be antenna(s) appropriate for non-terrestrial communication (such as a moving parabolic antenna, an omni-directional phased-array antenna, etc.)

The RAN device 1718 may include one or more interface(s) 1730. The interface(s) 1730 may be used to provide input to or output from the RAN device 1718. For example, a RAN device 1718 that is a base station may include interface(s) 1730 made up of transmitters, receivers, and other circuitry (e.g., other than the transceiver(s) 1726/antenna(s) 1728 already described) that enables the base station to communicate with other equipment in a CN, and/or that enables the base station to communicate with external networks, computers, databases, and the like for purposes of operations, administration, and maintenance of the base station or other equipment operably connected thereto.

The RAN device 1718 may include a multiplexing module 1732. The multiplexing module 1732 may be implemented via hardware, software, or combinations thereof. For example, the multiplexing module 1732 may be implemented as a processor, circuit, and/or instructions 1724 stored in the memory 1722 and executed by the processor(s) 1720. In some examples, the multiplexing module 1732 may be integrated within the processor(s) 1720 and/or the transceiver(s) 1726. For example, the multiplexing module 1732 may be implemented by a combination of software components (e.g., executed by a DSP or a general processor) and hardware components (e.g., logic gates and circuitry) within the processor(s) 1720 or the transceiver(s) 1726.

The multiplexing module 1732 may be used for various aspects of the present disclosure, for example, aspects of one or more of FIG. 10, FIG. 11, FIG. 13, and/or FIG. 15. The multiplexing module 1732 may configure the RAN device 1718 to, for example, send, to the wireless device 1702, over a service link, a dynamic grant that triggers the use of OCC spreading at the wireless device 1702, receive configuration information for a configured grant for the wireless device 1702 that uses OCC spreading, and/or receive corresponding signaling from the wireless device 1702 over the service link, as discussed herein. The multiplexing module 1716 may additionally/alternatively configure the RAN device 1718 to, for example, send, to the wireless device 1702, over a service link, a grant for a type 0 resource allocation (e.g., a bitmap) that allocates frequency domain resources on a sub-PRB basis and receive the corresponding signaling (e.g., a PUSCH) from the wireless device 1702 on the frequency domain resources that are so allocated on the service link, and/or, send, to the wireless device 1702, over the service link, a grant for a type 1 resource allocation (e.g., an FRIV) that allocates frequency domain resources on a sub-PRB basis and receive corresponding signaling (e.g., a PUSCH) from the wireless device 1702 on the frequency domain resources that are so allocated over the service link, as discussed herein.

Embodiments contemplated herein include an apparatus comprising means to perform one or more elements of any one or more of the method 800, the method 900, the method 1200 and/or the method 1400. This apparatus may be, for example, an apparatus of a UE (such as a wireless device 1702 that is a UE, as described herein).

Embodiments contemplated herein include one or more non-transitory computer-readable media comprising instructions to cause an electronic device, upon execution of the instructions by one or more processors of the electronic device, to perform one or more elements of any one or more of the method 800, the method 900, the method 1200 and/or the method 1400. This non-transitory computer-readable media may be, for example, a memory of a UE (such as a memory 1706 of a wireless device 1702 that is a UE, as described herein).

Embodiments contemplated herein include an apparatus comprising logic, modules, or circuitry to perform one or more elements of any one or more of the method 800, the method 900, the method 1200 and/or the method 1400. This apparatus may be, for example, an apparatus of a UE (such as a wireless device 1702 that is a UE, as described herein).

Embodiments contemplated herein include an apparatus comprising: one or more processors and one or more computer-readable media comprising instructions that, when executed by the one or more processors, cause the one or more processors to perform one or more elements of any one or more of the method 800, the method 900, the method 1200 and/or the method 1400. This apparatus may be, for example, an apparatus of a UE (such as a wireless device 1702 that is a UE, as described herein).

Embodiments contemplated herein include a signal as described in or related to one or more elements of any one or more of the method 800, the method 900, the method 1200 and/or the method 1400.

Embodiments contemplated herein include a computer program or computer program product comprising instructions, wherein execution of the program by a processor is to cause the processor to carry out one or more elements of any one or more of the method 800, the method 900, the method 1200 and/or the method 1400. The processor may be a processor of a UE (such as a processor(s) 1704 of a wireless device 1702 that is a UE, as described herein). These instructions may be, for example, located in the processor and/or on a memory of the UE (such as a memory 1706 of a wireless device 1702 that is a UE, as described herein).

Embodiments contemplated herein include an apparatus comprising means to perform one or more elements of any one or more of the method 1000, the method 1100, the method 1300 and/or the method 1500. This apparatus may be, for example, an apparatus of a base station (such as a RAN device 1718 that is a base station, as described herein).

Embodiments contemplated herein include one or more non-transitory computer-readable media comprising instructions to cause an electronic device, upon execution of the instructions by one or more processors of the electronic device, to perform one or more elements of any one or more of the method 1000, the method 1100, the method 1300 and/or the method 1500. This non-transitory computer-readable media may be, for example, a memory of a base station (such as a memory 1722 of a RAN device 1718 that is a base station, as described herein).

Embodiments contemplated herein include an apparatus comprising logic, modules, or circuitry to perform one or more elements of any one or more of the method 1000, the method 1100, the method 1300 and/or the method 1500. This apparatus may be, for example, an apparatus of a base station (such as a RAN device 1718 that is a base station, as described herein).

Embodiments contemplated herein include an apparatus comprising: one or more processors and one or more computer-readable media comprising instructions that, when executed by the one or more processors, cause the one or more processors to perform one or more elements of any one or more of the method 1000, the method 1100, the method 1300 and/or the method 1500. This apparatus may be, for example, an apparatus of a base station (such as a RAN device 1718 that is a base station, as described herein).

Embodiments contemplated herein include a signal as described in or related to one or more elements of any one or more of the method 1000, the method 1100, the method 1300 and/or the method 1500.

Embodiments contemplated herein include a computer program or computer program product comprising instructions, wherein execution of the program by a processing element is to cause the processing element to carry out one or more elements of any one or more of the method 1000, the method 1100, the method 1300 and/or the method 1500. The processor may be a processor of a base station (such as a processor(s) 1720 of a RAN device 1718 that is a base station, as described herein). These instructions may be, for example, located in the processor and/or on a memory of the base station (such as a memory 1722 of a RAN device 1718 that is a base station, as described herein).

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

Exemplary methods, apparatuses and computer-readable media are set out in the following items.

1. A method of a user equipment (UE) of a non-terrestrial network (NTN) that communicates with a base station over a service link of the NTN, comprising:

receiving, from the base station, a downlink control information (DCI) indicating an uplink grant for a first physical uplink shared channel (PUSCH), wherein the DCI comprises a resource allocation bitmap for the uplink grant;

determining, using a resource allocation configuration, that a resource block group (RBG) size for the PUSCH is less than or equal to one physical resource block (PRB);

identifying one or more RBGs of the RBG size for the PUSCH based on the resource allocation bitmap; and

sending the PUSCH to the base station using the one or more RBGs.

2. The method of item 1, further comprising sending, to the base station, a capability message indicating that the UE is capable of using the RBG size that is less than or equal to one PRB.
3. The method of item 1, further comprising:

determining a bandwidth part (BWP) size of a BWP for the uplink grant;

wherein the determining, using the resource allocation configuration, that the RBG size for the PUSCH is less than or equal to one PRB comprises applying the BWP size of the BWP to the resource allocation configuration.

4. The method of item 1, wherein the RBG size for the PUSCH is one half of a PRB.
5. The method of item 1, wherein the RBG size for the PUSCH is one third of a PRB.
6. The method of item 1, wherein the RBG size for the PUSCH is one fourth of a PRB.
7. The method of item 1, wherein the RBG size for the PUSCH is one PRB.
8. The method of item 1, wherein the uplink grant is a configured uplink grant, and further comprising receiving, from the base station, a configured grant configuration for the configured uplink grant that indicates the use of the resource allocation configuration.
9. The method of item 1, further comprising receiving, from the base station, a UE-specific PUSCH configuration for the PUSCH that indicates the use of the resource allocation configuration.
10. The method of item 1, further comprising:

determining a first number of resource elements (REs) allocated for the PUSCH within each of the one or more RBGs based on the RBG size for the PUSCH that is less than or equal to one PRB;
determining a total number of REs allocated for the PUSCH based on the first number of REs allocated for the PUSCH within each of the one or more RBGs; and
determining a transport block size (TBS) of the PUSCH based on the total number of REs allocated for the PUSCH.

11. The method of item 10, wherein the first number of REs allocated for the PUSCH within each of the one or more RBGs is determined according to:

$$N'_{RE} = \left( N_{sc}^{RB} \cdot N_{symb}^{sh} - N_{DMRS}^{PRB} - N_{oh}^{PRB} \right) \cdot P,$$

where:

$N'_{RE}$ is the first number of REs allocated for the PUSCH within each of the one or more RBGs;

$N_{sc}^{RB}$ is a per-PRB number of subcarriers in a frequency domain;

$N_{symb}^{sh}$ is a number of symbols for the PUSCH;

$N_{DMRS}^{PRB}$ is a second number of REs that is a per-PRB number of REs used for demodulation reference signals (DM-RSs);

$N_{oh}^{PRB}$ is a third number of REs that is a per-PRB configured overhead; and P is the RBG size for the PUSCH that is less than or equal to one PRB as expressed in PRB terms.

12. The method of item 10, wherein the UE is indicated to use a plurality of slots for a transport block size calculation, and wherein the second number of REs that is the total number of REs allocated for the PUSCH is determined according to:

$$N_{RE} = N \cdot min\left(156 \cdot P, N'_{RE}\right) \cdot n_{subPRB},$$

where:

$N_{RE}$ is the total number of REs allocated for the PUSCH;
$N$ is a number of the plurality of slots for the transport block size calculation;
$P$ is the RBG size for the PUSCH that is less than or equal to one PRB as expressed in PRB terms;
$N'_{RE}$ is the first number of REs allocated for the PUSCH within each of the one or more RBGs; and
$n_{subPRB}$ is a number of sub-PRBs allocated for the UE.

13. The method of item 10, wherein the second number of REs that is the total number of REs allocated for the PUSCH is determined according to:

$$N_{RE} = min\left(156 \cdot P, N'_{RE}\right) \cdot n_{subPRB},$$

where:

$N_{RE}$ is the total number of REs allocated for the PUSCH;
$P$ is the RBG size for the PUSCH that is less than or equal to one PRB as expressed in PRB terms;
$N'_{RE}$ is the first number of REs allocated for the PUSCH within each of the one or more RBGs; and
$n_{subPRB}$ is a number of sub-PRBs allocated for the UE.

14. A method of a base station of a non-terrestrial network (NTN) that communicates with a user equipment (UE) over a service link of the NTN, comprising:

sending, to the UE, a downlink control information (DCI) indicating a uplink grant for a first physical uplink shared channel (PUSCH), wherein the DCI comprises a resource allocation bitmap for the uplink grant that is configured to indicate one or more resource block groups (RBGs) of an RBG size that is less than or equal to one physical resource block (PRB) for the PUSCH; and
receiving the PUSCH from the UE on the one or more RBGs.

15. The method of item 14, further comprising receiving, from the UE, a capability message indicating that the UE is capable of using the RBG size that is less than or equal to one PRB.
16. The method of item 14, wherein the RBG size for the PUSCH is one half of a PRB.
17. The method of item 14, wherein the RBG size for the PUSCH is one third of a PRB.
18. The method of item 14, wherein the RBG size for the PUSCH is one fourth of a PRB.
19. The method of item 14, wherein the RBG size for the PUSCH is one PRB.
20. The method of item 14, wherein the uplink grant is a configured uplink grant, and further comprising sending, to the UE, a configured grant configuration for the configured uplink grant that indicates the use of the resource allocation configuration.
21. The method of item 14, further comprising sending, to the UE, a UE-specific PUSCH configuration for the PUSCH that indicates the use of the resource allocation configuration.
22. A method of a user equipment (UE) of a non-terrestrial network (NTN) that communicates with a base station over a service link of the NTN, comprising:

receiving, from the base station, a frequency resource indicator value (FRIV) that is configured to allocate transmission resources for a physical uplink shared channel (PUSCH) in terms of one or more sub-physical resource blocks (sub-PRBs), wherein each of the one or more sub-PRBs has a sub-PRB size that is less than one physical resource block (PRB);
identifying the transmission resources using the FRIV in terms of the one or more sub-PRBs; and

sending the PUSCH to the base station using the transmission resources.

23. The method of item 22, wherein the FRIV corresponds to the formula:

$$RIV = N_{BWP}^{size} \cdot N_{subRB}^{RB} \cdot \left(L_{subRBs} - 1\right) + subRB_{start},$$

where:

$RIV$ is the FRIV;

$N_{BWP}^{size}$ is a size of a bandwidth part (BWP) for the PUSCH;

$N_{subRB}^{RB}$ is a ratio of the PRB size to the sub-PRB size;

$L_{subRBs}$ is a length of the transmission resources in units of sub-PRBs; and $subRB_{start}$ is a location of a first sub-PRB of the transmission resources.

24. The method of item 22, wherein the FRIV corresponds to the formula:

$$RIV = N_{BWP}^{size} \cdot N_{subRB}^{RB} \cdot \left(N_{BWP}^{size} \cdot N_{subRB}^{RB} - L_{subRB} + 1\right) + \left(N_{BWP}^{size} \cdot N_{subRB}^{RB} - 1 - subRB_{start}\right),$$

where:

$RIV$ is the FRIV;

$N_{BWP}^{size}$ is a size of a bandwidth part (BWP) for the PUSCH;

$N_{subRB}^{RB}$ is a ratio of the PRB size to the sub-PRB size;

$L_{subRBs}$ is a length of the transmission resources in units of sub-PRBs; and $subRB_{start}$ is a location of a first sub-PRB of the transmission resources.

25. The method of item 22, wherein the sub-PRB size is one half of a PRB.
26. The method of item 22, wherein the sub-PRB size is one third of a PRB.
27. The method of item 22, wherein the sub-PRB size is one fourth of a PRB.
28. The method of item 22, further comprising:

determining a first number of resource elements (REs) allocated for the PUSCH within each of the one or more sub-PRBs based on a ratio of a PRB size to the sub-PRB size; and
determining a total number of REs allocated for the PUSCH based on the first number of REs allocated for the PUSCH within each of the one or more sub-PRBs.

29. The method of item 28, wherein the first number of REs allocated for the PUSCH within each of the one or more sub-PRBs is determined according to:

$$N'_{RE} = \left(N_{sc}^{RB} \cdot N_{symb}^{sh} - N_{DMRS}^{PRB} - N_{oh}^{PRB}\right) / N_{subRB}^{RB},$$

where:

$N'_{RE}$ is the first number of REs allocated for the PUSCH within each of the one or more sub-PRBs;

$N_{sc}^{RB}$ is a per-PRB number of subcarriers in a frequency domain;

$N_{symb}^{sh}$ is a number of symbols for the PUSCH;

$N_{DMRS}^{PRB}$ is a second number of REs that is a per-PRB number of REs used for demodulation reference signals (DM-RSs);

$N_{oh}^{PRB}$ is a third number of REs that is a per-PRB configured overhead; and

$N_{subRB}^{RB}$ is the ratio of the PRB size to the sub-PRB size.

30. The method of item 28, wherein the UE is indicated to use a plurality of slots for a transport block size calculation, and wherein the second number of REs that is the total number of REs allocated for the PUSCH is determined according to:

$$N_{RE} = N \cdot min\left(156/N_{subRB}^{RB}, N'_{RE}\right) \cdot n_{subPRB},$$

where:

$N_{RE}$ is the total number of REs allocated for the PUSCH;
$N$ is a number of the plurality of slots for the transport block size calculation;

$N_{subRB}^{RB}$ is the ratio of the PRB size to the sub-PRB size;
$N'_{RE}$ is the first number of REs allocated for the PUSCH within each of the one or more sub-PRB s; and
$n_{subPRB}$ is a number of sub-PRBs allocated for the UE.

31. The method of item 28, wherein the second number of REs that is the total number of REs allocated for the PUSCH is determined according to:

$$N_{RE} = min\left(156/N_{subRB}^{RB}, N'_{RE}\right) \cdot n_{subPRB},$$

where:

$N_{RE}$ is the total number of REs allocated for the PUSCH;

$N_{subRB}^{RB}$ is the ratio of the PRB size to the sub-PRB size;
$N'_{RE}$ is the first number of REs allocated for the PUSCH within each of the one or more sub-PRB s; and
$n_{subPRB}$ is a number of sub-PRBs allocated for the UE.

32. A method of a base station of a non-terrestrial network (NTN) that communicates with a first user equipment (UE) over a service link of the NTN, comprising:

calculating a frequency resource indicator value (FRIV) that is configured to allocate transmission resources for a physical uplink shared channel (PUSCH) in terms of one or more sub-physical resource blocks (sub-PRBs), wherein each of the one or more sub-PRBs has a sub-PRB size that is less than one physical resource block (PRB);
sending the FRIV to the UE; and
receiving, from the UE, the PUSCH on the transmission resources.

33. The method of item 32, wherein the FRIV is calculated according to:

$$RIV = N_{BWP}^{size} \cdot N_{subRB}^{RB} \cdot \left(L_{subRBs} - 1\right) + subRB_{start},$$

where:

$RIV$ is the FRIV;

$N_{BWP}^{size}$ is a size of a bandwidth part (BWP) for the PUSCH;

$N_{subRB}^{RB}$ is a ratio of the PRB size to the sub-PRB size;
$L_{subRBs}$ is a length of the transmission resources in units of sub-PRBs; and
$subRB_{start}$ is a location of a first sub-PRB of the transmission resources.

34. The method of item 32, wherein the FRIV is calculated according to:

$$RIV = N_{BWP}^{size} \cdot N_{subRB}^{RB} \cdot \left( N_{BWP}^{size} \cdot N_{subRB}^{RB} - L_{subRB} + 1 \right) + \left( N_{BWP}^{size} \cdot N_{subRB}^{RB} - 1 - subRB_{start} \right),$$

where:

RIV is the FRIV;

$N_{BWP}^{size}$ is a size of a bandwidth part (BWP) for the PUSCH;

$N_{subRB}^{RB}$ is a ratio of the PRB size to the sub-PRB size;

$L_{subRBs}$ is a length of the transmission resources in units of sub-PRBs; and

$subRB_{start}$ is a location of a first sub-PRB of the transmission resources.

35. The method of item 32, wherein the sub-PRB size is one half of a PRB.
36. The method of item 32, wherein the sub-PRB size is one third of a PRB.
37. The method of item 32, wherein the sub-PRB size is one fourth of a PRB.
38. An apparatus comprising means to perform the method of any of item 1 to item 37.
39. A computer-readable media comprising instructions to cause an electronic device, upon execution of the instructions by one or more processors of the electronic device, to perform the method of any of item 1 to item 37.
40. An apparatus comprising logic, modules, or circuitry to perform the method of any of item 1 to item 37.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Claims**

1. A method of a user equipment (UE) of a non-terrestrial network (NTN) that communicates with a base station over a service link of the NTN, comprising:

   receiving, from the base station, a downlink control information (DCI) indicating an uplink grant for a first physical uplink shared channel (PUSCH), wherein the DCI comprises a resource allocation bitmap for the uplink grant;
   determining, using a resource allocation configuration, that a resource block group (RBG) size for the PUSCH is less than or equal to one physical resource block (PRB);
   identifying one or more RBGs of the RBG size for the PUSCH based on the resource allocation bitmap; and
   sending the PUSCH to the base station using the one or more RBGs.

2. The method of claim 1, further comprising sending, to the base station, a capability message indicating that the UE is capable of using the RBG size that is less than or equal to one PRB.

3. The method of claim 1, further comprising:

   determining a bandwidth part (BWP) size of a BWP for the uplink grant;
   wherein the determining, using the resource allocation configuration, that the RBG size for the PUSCH is less than or equal to one PRB comprises applying the BWP size of the BWP to the resource allocation configuration.

4. The method of claim 1, wherein the RBG size for the PUSCH is one half of a PRB; or

   wherein the RBG size for the PUSCH is one third of a PRB; or
   wherein the RBG size for the PUSCH is one fourth of a PRB; or
   wherein the RBG size for the PUSCH is one PRB.

5. The method of claim 1, wherein the uplink grant is a configured uplink grant, and further comprising receiving, from the base station, a configured grant configuration for the configured uplink grant that indicates the use of the resource allocation configuration.

6. The method of claim 1, further comprising receiving, from the base station, a UE-specific PUSCH configuration for the PUSCH that indicates the use of the resource allocation configuration.

7. The method of claim 1, further comprising:

determining a first number of resource elements (REs) allocated for the PUSCH within each of the one or more RBGs based on the RBG size for the PUSCH that is less than or equal to one PRB;
determining a total number of REs allocated for the PUSCH based on the first number of REs allocated for the PUSCH within each of the one or more RBGs; and
determining a transport block size (TBS) of the PUSCH based on the total number of REs allocated for the PUSCH.

8. The method of claim 7, wherein the first number of REs allocated for the PUSCH within each of the one or more RBGs is determined according to:

$$N'_{RE} = \left( N_{sc}^{RB} \cdot N_{symb}^{sh} - N_{DMRS}^{PRB} - N_{oh}^{PRB} \right) \cdot P,$$

where:

$N'_{RE}$ is the first number of REs allocated for the PUSCH within each of the one or more RBGs;

$N_{sc}^{RB}$ is a per-PRB number of subcarriers in a frequency domain;

$N_{symb}^{sh}$ is a number of symbols for the PUSCH;

$N_{DMRS}^{PRB}$ is a second number of REs that is a per-PRB number of REs used for demodulation reference signals (DM-RSs);

$N_{oh}^{PRB}$ is a third number of REs that is a per-PRB configured overhead; and

P is the RBG size for the PUSCH that is less than or equal to one PRB as expressed in PRB terms.

9. The method of claim 7, wherein the UE is indicated to use a plurality of slots for a transport block size calculation, and wherein the second number of REs that is the total number of REs allocated for the PUSCH is determined according to:

$$N_{RE} = N \cdot min\left(156 \cdot P, N'_{RE}\right) \cdot n_{subPRB},$$

where:

$N_{RE}$ is the total number of REs allocated for the PUSCH;
N is a number of the plurality of slots for the transport block size calculation; P is the RBG size for the PUSCH that is less than or equal to one PRB as expressed in PRB terms;
$N'_{RE}$ is the first number of REs allocated for the PUSCH within each of the one or more RBGs; and
$n_{subPRB}$ is a number of sub-PRBs allocated for the UE.

10. The method of claim 7, wherein the second number of REs that is the total number of REs allocated for the PUSCH is determined according to:

$$N_{RE} = min\left(156 \cdot P, N'_{RE}\right) \cdot n_{subPRB},$$

where:

$N_{RE}$ is the total number of REs allocated for the PUSCH;
P is the RBG size for the PUSCH that is less than or equal to one PRB as expressed in PRB terms;
$N'_{RE}$ is the first number of REs allocated for the PUSCH within each of the one or more RBGs; and
$n_{subPRB}$ is a number of sub-PRBs allocated for the UE.

11. A method of a base station of a non-terrestrial network (NTN) that communicates with a user equipment (UE) over a service link of the NTN, comprising:

sending, to the UE, a downlink control information (DCI) indicating a uplink grant for a first physical uplink shared channel (PUSCH), wherein the DCI comprises a resource allocation bitmap for the uplink grant that is configured to indicate one or more resource block groups (RBGs) of an RBG size that is less than or equal to one physical resource block (PRB) for the PUSCH; and
receiving the PUSCH from the UE on the one or more RBGs.

12. The method of claim 11, further comprising receiving, from the UE, a capability message indicating that the UE is capable of using the RBG size that is less than or equal to one PRB.

13. The method of claim 11, wherein the uplink grant is a configured uplink grant, and further comprising sending, to the UE, a configured grant configuration for the configured uplink grant that indicates the use of the resource allocation configuration.

14. An apparatus comprising means to perform the method of any of claim 1 to claim 13.

15. A computer-readable media comprising instructions to cause an electronic device, upon execution of the instructions by one or more processors of the electronic device, to perform the method of any of claim 1 to claim 13.

**FIG. 1**

EP 4 564 727 A1

**FIG. 2**

300

302

UE

304

Base
Station

Capability message

306

308 — Decide to
apply OCC

Case 1 — Dynamic uplink grant with OCC

312

310

314

PUSCH with OCC

Case 2 — Configured uplink grant with OCC

318

316

320

PUSCH with OCC

**FIG. 3**

**FIG. 4**

EP 4 564 727 A1

| Bandwidth Part Size | Configuration 1 | Configuration 2 | Configuration 3 |
|---|---|---|---|
| 1-36 | 2 | 4 | 8 |
| 37-72 | 4 | 8 | 16 |
| 73-144 | 8 | 16 | 32 |
| 145-275 | 16 | 16 | 32 |

**FIG. 5**

EP 4 564 727 A1

| Bandwidth Part Size | Configuration 1 | Configuration 2 | Configuration 3 | Configuration 4 |
|---|---|---|---|---|
| 1-36 | 2 | 4 | 8 | 1/4 |
| 37-72 | 4 | 8 | 16 | 1/2 |
| 73-144 | 8 | 16 | 32 | 1 |
| 145-275 | 16 | 16 | 32 | 2 |

600

610   602   604   606   608

**FIG. 6**

**FIG. 7**

800

| Receiving, from the base station, a DCI that indicates a dynamic uplink grant for a first PUSCH, wherein the DCI comprises an OCC sequence index | 802 |

| Identifying, using the OCC sequence index, a first OCC sequence for the first PUSCH from a set of OCC sequences of an OCC size corresponding to the OCC sequence index | 804 |

| Spreading first data for the first PUSCH into the first PUSCH using the first OCC sequence | 806 |

| Sending, to the base station, over the service link, the first PUSCH according to the dynamic uplink grant | 808 |

**FIG. 8**

900

| Receiving, from the base station, RRC signaling comprising configuration information for a configured uplink grant for a first PUSCH | 902 |

| Identifying, using an OCC sequence index, a first OCC sequence for the first PUSCH from a set of OCC sequences of an OCC size corresponding to the OCC sequence index | 904 |

| Spreading first data for the first PUSCH into the first PUSCH using the first OCC sequence | 906 |

| Sending, to the base station, over the service link, the first PUSCH according to the configured uplink grant | 908 |

**FIG. 9**

1000

Determining, based on an OCC spreading use factor, that the UE is to use an OCC sequence to spread data of a PUSCH — 1002

Sending, to the UE, a DCI that indicates a dynamic uplink grant for the PUSCH, wherein the DCI comprises an OCC sequence index identifying the OCC sequence — 1004

Receiving, from the UE, corresponding to the dynamic uplink grant, the PUSCH having the data as spread by the OCC sequence — 1006

**FIG. 10**

1100

Determining, based on an OCC spreading use factor, that the UE is to use an OCC sequence to spread data of a PUSCH — 1102

Sending, to the UE, RRC signaling comprising configuration information for a configured uplink grant for the first PUSCH — 1104

Receiving, from the UE, corresponding to the configured uplink grant, the PUSCH having the data as spread by the OCC sequence — 1106

**FIG. 11**

1200

Receiving, from the base station, a DCI indicating an uplink grant for a first PUSCH, wherein the DCI comprises a resource allocation bitmap for the uplink grant ⟶ 1202

Determining, using a resource allocation configuration, that a resource block group (RBG) size for the PUSCH is less than or equal to one PRB ⟶ 1204

Identifying one or more RBGS of the RBG size for the PUSCH based on the resource allocation bitmap ⟶ 1206

Sending the PUSCH to the base station using the one or more RBGS ⟶ 1208

**FIG. 12**

1300

Sending, to the UE, a DCI indicating a uplink grant for a first PUSCH, wherein the DCI comprises a resource allocation bitmap for the uplink grant that is configured to indicate one or more RBGS of an RBG size that is less than or equal to one PRB for the PUSCH ⟶ 1302

Receiving the PUSCH from the UE on the one or more RBGS ⟶ 1304

**FIG. 13**

1400

Receiving, from the base station, a FRIV that is configured to allocate transmission resources for a PUSCH in terms of one or more sub-PRBs, wherein each of the one or more sub-PRBs has a sub-PRB size that is less than one PRB ⌇ 1402

Identifying the transmission resources using the FRIV in terms of the one or more sub-PRBs ⌇ 1404

Sending the PUSCH to the base station using the transmission resources ⌇ 1406

**FIG. 14**

1500

Calculating a FRIV that is configured to allocate transmission resources for a PUSCH in terms of one or more sub-PRBs, wherein each of the one or more sub-PRBs has a sub-PRB size that is less than one PRB ⌇ 1502

Sending the FRIV to the UE ⌇ 1504

Receiving, from the UE, the PUSCH on the transmission resources ⌇ 1506

**FIG. 15**

**FIG. 16**

EP 4 564 727 A1

1700

**RAN DEVICE 1718**
- PROCESSOR(S) 1720
- MEMORY 1722
  - INSTRUCTIONS 1724
- TRANSCEIVER(S) 1726
- INTERFACE(S) 1730
- MULTIPLEXING MODULE 1732

ANTENNA(S) 1728

1734

ANTENNA(S) 1712

**WIRELESS DEVICE 1702**
- PROCESSOR(S) 1704
- MEMORY 1706
  - INSTRUCTIONS 1708
- TRANSCEIVER(S) 1710
- INTERFACE(S) 1714
- MULTIPLEXING MODULE 1716

**FIG. 17**

## EUROPEAN SEARCH REPORT

**Application Number**

EP 24 20 9774

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/139455 A1 (CHATTERJEE DEBDEEP [US] ET AL) 4 May 2023 (2023-05-04) * paragraphs [0098], [0031], [0161] * ----- | 1-6, 11-15 | INV. H04L5/00 |
| X | US 2022/116967 A1 (YEO JEONGHO [KR] ET AL) 14 April 2022 (2022-04-14) * paragraphs [0306], [0309], [0302], [0230] * ----- | 1,11,14, 15 | |
| A | WO 2022/245025 A1 (SAMSUNG ELECTRONICS CO LTD [KR]) 24 November 2022 (2022-11-24) * paragraphs [0205], [0206]; table 11 * ----- | 1,3, 7-11,14, 15 | |
| E | WO 2024/225691 A1 (SAMSUNG ELECTRONICS CO LTD [KR]) 31 October 2024 (2024-10-31) * paragraphs [0005], [0134] * ----- | 1,11,14, 15 | |

**TECHNICAL FIELDS SEARCHED (IPC)**

H04L

The present search report has been drawn up for all claims

| Place of search | Date of completion of the search | Examiner |
|---|---|---|
| The Hague | 28 February 2025 | Kulin, Merima |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9774

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2025

| Patent document cited in search report | Publication date | Patent family member(s) | | Publication date |
|---|---|---|---|---|
| US 2023139455 A1 | 04-05-2023 | CN | 111434165 A | 17-07-2020 |
| | | DE | 112018000160 T5 | 01-08-2019 |
| | | US | 2023139455 A1 | 04-05-2023 |
| | | WO | 2018232284 A1 | 20-12-2018 |
| US 2022116967 A1 | 14-04-2022 | KR | 20220046984 A | 15-04-2022 |
| | | US | 2022116967 A1 | 14-04-2022 |
| | | WO | 2022075789 A1 | 14-04-2022 |
| WO 2022245025 A1 | 24-11-2022 | KR | 20220157206 A | 29-11-2022 |
| | | US | 2023413258 A1 | 21-12-2023 |
| | | WO | 2022245025 A1 | 24-11-2022 |
| WO 2024225691 A1 | 31-10-2024 | KR | 20240156870 A | 31-10-2024 |
| | | WO | 2024225691 A1 | 31-10-2024 |

EPO FORM P0459

For more details about this annex : see Official Journal of the European Patent Office, No. 12/82